# EUROPÄISCHE PATENTSCHRIFT

(11) **EP 3 154 741 B1**
(45) Veröffentlichungstag und Bekanntmachung des Hinweises auf die Patenterteilung: **15.04.2020**
(21) Anmeldenummer: 15731240.6
(22) Anmeldetag: 12.06.2015
(51) Int. Cl.: B23K 26/14, B23K 26/70, B23K 26/042, B23K 26/146

(54) **FLÜSSIGKEITSTRAHL-LASERBEARBEITUNGSMASCHINE UND VERFAHREN ZUM FOKUSSIEREN EINES LASERSTRAHLES IN EINER DÜSENÖFFNUNG EINER DÜSE DIESER MASCHINE**
MACHINE FOR LASER PROCESSING WITH A FLUID BEAM AND METHOD FOR FOCUSING A LASER BEAM IN A NOZZLE OPENING OF A NOZZLE OF THIS MACHINE
MACHINE D'USINAGE LASER AVEC UN FAISCEAU DE FLUIDE ET METHODE DE FOCALISATION D'UN FAISCEAU LASER DANS L'OUVERTURE DE LA BUSE D'UNE BUSE DE CETTE MACHINE

(30) Priorität: 16.06.2014 EP 14405051
(43) Veröffentlichungstag der Anmeldung: 19.04.2017
(73) Patentinhaber: Synova SA, 1266 Duillier (CH)
(72) Erfinder: RICHERZHAGEN, Bernold, 1025 Saint-Sulpice (CH); ANDEREGG, Ludovic, 1802 Corseaux (CH); EPPLE, Maximilian, 1042 Assens (CH); RICHMANN, Annika, 1007 Lausanne (CH)
(74) Vertreter: Keller & Partner Patentanwälte AG
(86) Internationale Anmeldenummer: PCT/CH2015/000088
(87) Internationale Veröffentlichungsnummer: WO 2015/192255

(56) Entgegenhaltungen:
- EP-A1- 0 515 983
- EP-A1- 0 515 983
- EP-A1- 0 515 983
- WO-A1-2006/050622
- WO-A1-2006/050622
- WO-A1-2006/050622
- JP-A- 2000 334 590
- JP-A- 2000 334 590
- JP-A- 2000 334 590
- US-A- 4 675 501
- US-A- 4 675 501
- US-A1- 2006 046 435
- US-A1- 2006 046 435
- US-A1- 2009 001 063
- US-A1- 2009 001 063
- DATABASE WPI Week 201361 Thomson Scientific, London, GB; AN 2013-N20317 XP002782648, -& JP 2013 180308 A (SUGINO MACHINE KK) 12. September 2013 (2013-09-12)
- DATABASE WPI Week 201361 Thomson Scientific, London, GB; AN 2013-N20317 XP002733350, -& JP 2013 180308 A (SUGINO MACHINE KK) 12. September 2013 (2013-09-12)
- DATABASE WPI Week 201361 Thomson Scientific, London, GB; AN 2013-N20317 XP002782648, & JP 2013 180308 A (SUGINO MACHINE KK) 12 September 2013 (2013-09-12)

## Beschreibung

### Technisches Gebiet

Die Erfindung betrifft eine Flüssigkeitsstrahl-Laserbearbeitungsmaschine mit einem Bearbeitungskopf zum Einkoppeln eines Laserstrahls in einen Flüssigkeitsstrahl. Der Bearbeitungskopf weist eine Düse mit einer Düsenöffnung zur Erzeugung des Flüssigkeitsstrahls auf. Der Laserstrahl ist durch eine Fokussiereinrichtung in einen Eingang der Düsenöffnung fokussierbar, um den Laserstrahl in den Flüssigkeitsstrahl einzukoppeln. Die Flüssigkeitsstrahl-Laserbearbeitungsmaschine umfasst einen zweidimensionalen Bildsensor zum Abbilden eines Bereichs der Düse um den Eingang der Düsenöffnung herum.

### Stand der Technik

Es sind Laserbearbeitungsvorrichtungen bekannt, bei welchen der Laserstrahl in einen dünnen Wasserstrahl eingekoppelt wird, um den Laserstrahl wie in einem optischen Wellenleiter zur Materialbearbeitungsstelle zu führen. Solche Laserbearbeitungsvorrichtungen haben den Vorteil, dass die Energie des Lasers über die Länge des Wasserstrahls auf den Querschnitt des Wasserstrahls konzentriert ist. Entsprechend muss der Fokuspunkt des Laserstrahls bei variierendem Abstand zur Materialbearbeitungsstelle nicht ständig nachgeführt werden. Solche Vorrichtungen haben ausserdem den Vorteil, dass das zu bearbeitende Material durch den Wasserstrahl kontinuierlich gekühlt werden kann.

Um einen dünnen Wasserstrahl zu erzeugen und um den Laserstrahl in diesen Wasserstrahl einkoppeln zu können, weisen derartige Laserbearbeitungsvorrichtungen einen Bearbeitungskopf auf. Dieser Bearbeitungskopf kann unterschiedlich aufgebaut und geformt sein. So kann er beispielsweise in der restlichen Laserbearbeitungsvorrichtung eingelassen sein, sodass der Wasserstrahl mit dem eingekoppelten Laserstrahl quasi aus einer Wand der Laserbearbeitungsvorrichtung austritt. In diesem Fall kann ein zu bearbeitendes Objekt vor dieser Wand relativ zum Bearbeitungskopf bewegt werden, damit der Wasserstrahl mit dem eingekoppelten Laserstrahl die zu bearbeitenden Stellen des Objekts erreichen kann. Es besteht aber auch die Möglichkeit, dass der Bearbeitungskopf ein freies, distales Ende der Laserbearbeitungsvorrichtung bildet oder an einem freien, distalen Ende eines bewegbaren Arms der Laserbearbeitungsvorrichtung angeordnet ist. Dies ermöglicht es, dass der Wasserstrahl mit dem eingekoppelten Laserstrahl über ein zu bearbeitendes Objekt bewegt werden kann, um die zu bearbeitenden Stellen mit dem Wasserstrahl zu erreichen.

Unabhängig davon, wie der Bearbeitungskopf genau geformt ist, ist er in der Regel durch eine Optikeinheit sowie eine Kopplungseinheit gebildet. Dabei umfasst die Optikeinheit wenigstens ein optisches Element wie beispielsweise eine Linse oder eine Linsengruppe, um den Laserstrahl zu fokussieren. Die Kopplungseinheit hingegen umfasst eine Düse mit einer Düsenöffnung zur Erzeugung eines Flüssigkeitsstrahls. Dabei sind die Optikeinheit und die Kopplungseinheit im Bearbeitungskopf derart zueinander angeordnet, dass die Optikeinheit den Laserstrahl derart in den Flüssigkeitsstrahl fokussieren kann, dass der Laserstrahl in den Flüssigkeitsstrahl eingekoppelt wird.

Ein Beispiel eines derartigen Bearbeitungskopfs ist in der EP 1 833 636 B1 der Synova S.A. beschrieben. Dieser Bearbeitungskopf umfasst eine Kopplungseinheit zum Erzeugen eines Flüssigkeitsstrahls mittels einer Flüssigkeitsdüse. Weiter umfasst dieser Bearbeitungskopf eine Optikeinheit, mittels welcher ein Laserstrahl in den Flüssigkeitskanal der Flüssigkeitsdüse fokussiert wird, um den Laserstrahl in den Flüssigkeitsstrahl zu koppeln. Die Kopplungseinheit umfasst eine Fassung, ein Fensterelement sowie ein Verschlussteil. Auf der Oberseite der Fassung ist eine konische Öffnung für die Optikeinheit angeordnet. Am unteren Ende dieser konischen Öffnung weist die Fassung eine Schulter auf, an welcher das Fensterelement an seiner oberen Seite anliegt. Das Verschlussteil ist auf der Unterseite des Fensterelements angeordnet und schliesst einen dünnen, scheibenförmigen Zwischenraum zwischen dem Fensterelement und dem Verschlussteil nach unten ab. Dieser Zwischenraum dient als Flüssigkeitszuführleitung für die Flüssigkeitsdüse, welche in eine Ausnehmung in der oberen, dem Zwischenraum zugewandten Seite des Verschlussteils eingesetzt ist. Diese Flüssigkeitsdüse hat einen zentralen Kanal, welcher einen feinen Flüssigkeitsstrahl bildet, in den die Laserstrahlung eingekoppelt wird.

Der Nachteil solcher Bearbeitungsköpfe ist, dass sie senkrecht zum Flüssigkeitsstrahl eine grosse Breite aufweisen. Zudem ist der Flüssigkeitsstrahl nur über eine beschränkte Länge stabil. Danach zerperlt er in einzelne Tropfen, welche über eine Falllänge in leicht abgeflachte, annähernd kugelförmige Tropfen übergehen. Da nur der stabile Flüssigkeitsstrahl als Lichtleiter für den Laserstrahl dienen kann, ist die verfügbare Distanz von der Flüssigkeitsdüse bis zur zu bearbeitenden Stelle beschränkt. Dies führt dazu, dass mit solchen Bearbeitungsköpfen zwar im Wesentlichen flächige Bearbeitungsstücke problemlos bearbeitet werden können. Sobald aber im Rahmen einer dreidimensionalen Bearbeitung von Objekten auch schwieriger zugängliche Stellen bearbeitet werden sollen, sind solche Bearbeitungsköpfe ungeeignet. In diesem Fall würden sie aufgrund ihrer Breite gegen das zu bearbeitende Objekt stossen, wenn das Objekt genügend nah am Bearbeitungskopf gehalten wird, um mit einem stabilen Flüssigkeitsstrahl mit eingekoppeltem Laserstrahl die zu bearbeitende Stelle zu erreichen.

### Erster Aspekt des Bearbeitungskopfes

Ein erster Aspekt, nicht direkt Teil der Erfindung, betrifft einen Bearbeitungskopf, der eine dreidimensionale Bearbeitung von Objekten ermöglicht. Gemäss diesem ersten Aspekt ist im mit der Optikeinheit verbundenen Zustand der Kopplungseinheit die Flüssigkeitsschnittstelle in Strahlrichtung gesehen vor dem in Strahlrichtung gesehen letzten optischen Element der Optikeinheit angeordnet.

Dabei bedeutet der Begriff "Flüssigkeitsschnittstelle" die Stelle, an welcher Flüssigkeit von der Optikeinheit an die Kopplungseinheit weitergeleitet wird, um den Flüssigkeitsraum mit Flüssigkeit zu versorgen. Hierzu weist die Optikeinheit eine Öffnung auf, aus welcher Flüssigkeit für den Flüssigkeitsraum aus der Optikeinheit austreten kann. Zudem weist die Kopplungseinheit eine Öffnung auf, in welche Flüssigkeit für den Flüssigkeitsraum geleitet werden kann. Diese beiden Öffnungen sind im mit der Optikeinheit verbundenen Zustand der Kopplungseinheit derart zueinander angeordnet, dass aus der Öffnung in der Optikeinheit austretende Flüssigkeit in die Öffnung in der Kopplungseinheit fliessen kann. Dadurch bilden die beiden Öffnungen zusammen mit einem allenfalls zwischen der Optikeinheit und der Kopplungseinheit eingeschlossenen Bereich, in welchem aus der Öffnung in der Optikeinheit austretende Flüssigkeit zur Öffnung in der Kopplungseinheit geleitet wird, die Flüssigkeitsschnittstelle. Dabei können die beiden Öffnungen im mit der Optikeinheit verbundenen Zustand der Kopplungseinheit einander zugewandt direkt aufeinanderliegen. In diesem Fall bilden die beiden aufeinander liegenden Öffnungen die Flüssigkeitsschnittstelle. Die beiden Öffnungen können aber auch seitlich etwas zueinander versetzt angeordnet sein. Unabhängig von der Anordnung der beiden Öffnungen können die Optikeinheit und die Kopplungseinheit zudem einen Bereich einschliessen, in welchem aus der Öffnung in der Optikeinheit austretende Flüssigkeit zur Öffnung in der Kopplungseinheit geleitet wird. Dieser Bereich kann beispielsweise durch eine oder mehrere zwischen der Optikeinheit und der Kopplungseinheit angeordnete Dichtungen begrenzt sein. In diesem Fall erstreckt sich die Flüssigkeitsschnittstelle über diesen Bereich sowie die beiden Öffnungen.

Das in Strahlrichtung gesehen letzte optische Element der Optikeinheit ist das optische Element, durch welches der Laserstrahl als letztes in der Optikeinheit geleitet wird, bevor er die Optikeinheit verlässt und in der Kopplungseinheit in den Flüssigkeitsstrahl eingekoppelt wird. Daher kann es sich bei diesem letzten optischen Element beispielsweise um eine Linse oder um eine Linsengruppe handeln, mittels welcher der Laserstrahl fokussiert werden kann. Es kann sich beim in Strahlrichtung gesehen letzten optischen Element aber auch um ein Fenster handeln, welches die Optikeinheit nach aussen abschliesst und selbst keine fokussierenden Eigenschaften aufweist. Unabhängig von der konkreten Ausführungsform des in Strahlrichtung gesehen letzten optischen Elements ist die Flüssigkeitsschnittstelle in Strahlrichtung gesehen vor diesem optischen Element angeordnet, sodass ein durch die Optikeinheit geleiteter Laserstrahl zuerst neben der Flüssigkeitsschnittstelle vorbei oder durch die Flüssigkeitsschnittstelle hindurch geleitet wird, bevor er das letzte optische Element der Optikeinheit passiert. Dabei ist für die Lösung unerheblich, ob die Kopplungseinheit direkt mit der Optikeinheit verbindbar ist, oder ob die Kopplungseinheit über ein Zwischenelement mit der Optikeinheit verbindbar ist. Genauso ist unerheblich, wie die Optikeinheit und die Kopplungseinheit genau ausgebildet sind. So kann die Optikeinheit beispielsweise als separate Einheit an einer Laserbearbeitungsvorrichtung anbringbar sein. Dadurch kann ein Laserstrahl, welcher von einem zur Laserbearbeitungsvorrichtung gehörenden Laser erzeugt wurde, durch die Optikeinheit geleitet werden. Von der Optikeinheit kann dieser Laserstrahl fokussiert und in den Flüssigkeitsstrahl eingekoppelt werden, welcher von der an der Optikeinheit angebrachten Kopplungseinheit erzeugt wird. Die Optikeinheit kann aber beispielsweise auch den Endbereich eines Strahlenrohrs einer Laserbearbeitungsvorrichtung bilden, in welchem der vom zur Laserbearbeitungsvorrichtung gehörenden Laser erzeugte Laserstrahl geführt ist. In diesem Fall kann das Strahlenrohr Teil der Laserbearbeitungsvorrichtung sein und in seinem Endbereich in die Optikeinheit übergehen. Dabei kann die Kopplungseinheit beispielsweise aussen am Endbereich des Strahlenrohrs, welcher Teil der Optikeinheit ist, befestigt sein.

Dieser erste Aspekt hat den Vorteil, dass der Bearbeitungskopf kleiner konstruiert werden kann. Zudem kann der Bearbeitungskopf im Bereich, wo der Flüssigkeitsstrahl mit dem eingekoppelten Laserstrahl den Bearbeitungskopf verlässt, schmaler gebaut werden. Dadurch können mit dem Bearbeitungskopf schwierig zugängliche Stellen einfacher mit einem stabilen Flüssigkeitsstrahl und einem darin eingekoppelten Laserstrahl erreicht werden. Entsprechend wird dadurch auch eine dreidimensionale Bearbeitung von Objekten erleichtert.

Vorteilhafterweise für diesen ersten Aspekt weist im mit der Optikeinheit verbundenen Zustand der Kopplungseinheit die Flüssigkeitsschnittstelle eine Flüssigkeitsschnittstellenfläche auf, welche in einem Winkel zu einer senkrecht zur Strahlrichtung ausgerichteten Ebene ausgerichtet ist. Dabei verläuft die Flüssigkeitsschnittstellenfläche durch die Flüssigkeitsschnittstelle und damit zwischen der die Öffnung in der Optikeinheit umgebenden Oberfläche der Optikeinheit und der die Öffnung in der Kopplungseinheit umgebenden Oberfläche der Kopplungseinheit. Wenn daher die Öffnung in der Optikeinheit direkt auf der Öffnung der Kopplungseinheit liegt, sodass die von der Optikeinheit zur Kopplungseinheit geleitete Flüssigkeit zur Versorgung des Flüssigkeitsraums direkt von der Öffnung in der Optikeinheit in die Öffnung der Kopplungseinheit fliesst, so ist die Flüssigkeitsschnittstellenfläche durch den um die beiden Öffnungen liegende Bereich der aufeinanderliegenden Oberflächen der Optikeinheit und der Kopplungseinheit definiert und verläuft im Bereich, wo die entsprechenden Oberflächen der Optikeinheit und der Kopplungseinheit aufgrund der Öffnungen fehlen, stetig weiter. Dabei ist unbedeutend, ob diese um die beiden Öffnungen liegenden Bereiche der Oberflächen auf die Flüssigkeitsschnittstelle begrenzt sind, oder ob sie bis unmittelbar ausserhalb der Flüssigkeitsschnittstelle reichen. Wenn die Öffnung in der Optikeinheit hingegen nicht direkt auf der Öffnung der Kopplungseinheit liegt und die aus der Öffnung in der Optikeinheit austretende Flüssigkeit zur Versorgung des Flüssigkeitsraums durch einen zwischen der Optikeinheit und der Kopplungseinheit eingeschlossenen Bereich zur Öffnung in der Kopplungseinheit geleitet wird, so verläuft die Flüssigkeitsschnittstellenfläche zwischen dem um die Öffnung in der Optikeinheit liegenden Bereich der Oberfläche der Optikeinheit und dem um die Öffnung in der Kopplungseinheit liegenden Bereich der Oberfläche der Kopplungseinheit. Wenn ein Abstand zwischen der Oberfläche der Optikeinheit und der Oberfläche der Kopplungseinheit im Bereich um die Öffnungen konstant ist und die beiden Oberflächen in diesem Bereich somit parallel zueinander verlaufen, so verläuft die Flüssigkeitsschnittstellenfläche parallel zur Oberfläche der Optikeinheit und parallel zur Oberfläche der Kopplungseinheit zwischen diesen beiden Oberflächen und verläuft im Bereich, wo die entsprechenden Oberflächen der Optikeinheit und der Kopplungseinheit aufgrund der Öffnungen fehlen, stetig weiter. Dabei ist unbedeutend, ob diese um die beiden Öffnungen liegenden Bereiche der Oberflächen auf die Flüssigkeitsschnittstelle begrenzt sind, oder ob sie bis unmittelbar ausserhalb der Flüssigkeitsschnittstelle reichen. Wenn hingegen die Oberfläche der Optikeinheit in einem Winkel zu der Oberfläche der Kopplungseinheit verläuft, so dass sich ein senkrecht zu den Oberflächen gemessener Abstand zwischen den beiden Oberflächen innerhalb der Flüssigkeitsschnittstelle ändert, so verläuft die Flüssigkeitsschnittstellenfläche zwischen diesen beiden Oberflächen. Dabei schliesst die Flüssigkeitsschnittstellenfläche einen gleichen Winkel zur Oberfläche der Optikeinheit und zur Oberfläche der Kopplungseinheit ein und verläuft im Bereich, wo die entsprechenden Oberflächen der Optikeinheit und der Kopplungseinheit aufgrund der Öffnungen fehlen, stetig weiter. Dabei ist unbedeutend, ob diese um die beiden Öffnungen liegenden Bereiche der Oberflächen auf die Flüssigkeitsschnittstelle begrenzt sind, oder ob sie bis unmittelbar ausserhalb der Flüssigkeitsschnittstelle reichen.

Da sowohl der um die Öffnung in der Optikeinheit liegende Bereich der Oberfläche der Optikeinheit als auch der um die Öffnung in der Kopplungseinheit liegende Bereich der Oberfläche der Kopplungseinheit gekrümmt sein kann, kann auch die Flüssigkeitsschnittstellenfläche gekrümmt sein. So kann beispielsweise die Kopplungseinheit einen zylinderförmigen Bereich aufweisen, auf dessen radialer Aussenfläche die Öffnung für die Versorgung des Flüssigkeitsraums mit Flüssigkeit angeordnet ist. Zudem kann die Optikeinheit beispielsweise eine Öffnung mit kreisförmigem Querschnitt aufweisen, in welche der zylinderförmige Bereich der Kopplungseinheit geschoben werden kann, um die Kopplungseinheit mit der Optikeinheit zu verbinden. In diesem Fall kann die Öffnung in der Optikeinheit, aus welcher Flüssigkeit für den Flüssigkeitsraum aus der Optikeinheit austreten kann, auf der Innenseite der Öffnung mit kreisförmigem Querschnitt angeordnet sein. Da die Flüssigkeitsschnittstelle somit auf dem zylinderförmigen Bereich der Kopplungseinheit liegt, folgt auch die Flüssigkeitsschnittstellenfläche der Form des zylinderförmigen Bereichs der Kopplungseinheit. Damit ist die Flüssigkeitsschnittstellenfläche in diesem Fall gekrümmt.

Dass die Flüssigkeitsschnittstellenfläche in einem Winkel zur senkrecht zur Strahlrichtung ausgerichteten Ebene ausgerichtet ist, bedeutet, dass innerhalb der Flüssigkeitsschnittstelle bei jedem Punkt der Flüssigkeitsschnittstellenfläche die Normale auf diesen Punkt einen Winkel zur Strahlrichtung einschliesst und damit nicht parallel zur Strahlrichtung ausgerichtet ist. Dies hat den Vorteil, dass die Flüssigkeitsschnittstelle auf einfache Art und Weise abgedichtet werden kann, wenn die Kopplungseinheit zur Verbindung mit der Optikeinheit entgegen der Strahlrichtung zur Optikeinheit bewegbar und damit auf einfache Art und Weise mit der Optikeinheit verbindbar ausgebildet ist. Wenn dabei die Flüssigkeitsschnittstellenfläche in einem Winkel zur Bewegungsrichtung der Kopplungseinheit ausgerichtet ist, werden bei der Verbindung der Kopplungseinheit mit der Optikeinheit die Öffnung in der Kopplungseinheit und die Öffnung in der Optikeinheit nicht in Richtung der Normalen des um die Öffnung in der Optikeinheit liegenden Bereichs der Oberfläche der Optikeinheit und der Normalen des um die Öffnung in der Kopplungseinheit liegenden Bereichs der Oberfläche der Kopplungseinheit, sondern in seitliche Richtung aufeinander zu bewegt. Dadurch kann die Flüssigkeitsschnittstelle einfacher abgedichtet werden.

In einer bevorzugten Variante dieses ersten Aspekts verläuft die Flüssigkeitsschnittstellenfläche parallel zur Strahlrichtung. Dies bedeutet, dass innerhalb der Flüssigkeitsschnittstelle bei jedem Punkt der Flüssigkeitsschnittstellenfläche die Normale auf diesen Punkt in einer senkrecht zur Strahlrichtung ausgerichteten Ebene liegt. Dies hat den Vorteil, dass die Flüssigkeitsschnittstelle auf einfache Art und Weise abgedichtet werden kann, wenn die Kopplungseinheit zur Verbindung mit der Optikeinheit entgegen der Strahlrichtung zur Optikeinheit bewegbar und damit auf einfache Art und Weise mit der Optikeinheit verbindbar ausgebildet ist, weil die Flüssigkeitsschnittstellenfläche dabei parallel zur Bewegungsrichtung der Kopplungseinheit ausgerichtet ist und entsprechend die Öffnung in der Kopplungseinheit entlang des um diese Öffnung liegenden Bereichs der Oberfläche der Kopplungseinheit vor die Öffnung in der Optikeinheit geschoben wird. Um diesen Vorteil zu erreichen, spielt es keine Rolle, ob die Flüssigkeitsschnittstellenfläche innerhalb der Flüssigkeitsschnittstelle ebenartig flach oder gekrümmt ist. So kann die Kopplungseinheit beispielsweise einen zylinderförmigen Bereich aufweisen, auf dessen radialer Aussenfläche die Öffnung für die Versorgung des Flüssigkeitsraums mit Flüssigkeit angeordnet ist, während die Optikeinheit eine Öffnung mit kreisförmigem Querschnitt aufweist, in welche der zylinderförmige Bereich der Kopplungseinheit entgegen der Strahlrichtung geschoben werden kann, um die Kopplungseinheit mit der Optikeinheit zu verbinden. In diesem Fall kann die Öffnung in der Optikeinheit, aus welcher Flüssigkeit für den Flüssigkeitsraum aus der Optikeinheit austreten kann, auf der Innenseite der Öffnung mit kreisförmigem Querschnitt angeordnet sein. Damit ist die Flüssigkeitsschnittstellenfläche in diesem Fall gekrümmt. Es besteht aber beispielsweise auch die Möglichkeit, dass die Kopplungseinheit einen Bereich mit quadratischem Querschnitt aufweist, wobei die Öffnung für die Versorgung des Flüssigkeitsraums mit Flüssigkeit auf einer der vier flachen Aussenseiten dieses Bereichs angeordnet ist. Dabei kann die Optikeinheit eine Öffnung mit ebenfalls quadratischem Querschnitt aufweisen, in welche der Bereich der Kopplungseinheit entgegen der Strahlrichtung geschoben werden kann, um die Kopplungseinheit mit der Optikeinheit zu verbinden. In diesem Fall kann die Öffnung in der Optikeinheit, aus welcher Flüssigkeit für den Flüssigkeitsraum aus der Optikeinheit austreten kann, auf der Innenseite der Öffnung mit quadratischem Querschnitt auf einer der vier flachen Seiten angeordnet sein. Damit ist die Flüssigkeitsschnittstellenfläche in diesem Fall ebenartig flach.

Alternativ dazu besteht aber auch die Möglichkeit, dass im mit der Optikeinheit verbundenen Zustand der Kopplungseinheit die Flüssigkeitsschnittstelle eine Flüssigkeitsschnittstellenfläche aufweist, welche zumindest in einem Bereich parallel zur senkrecht zur Strahlrichtung ausgerichteten Ebene ausgerichtet ist.

Vorteilhafterweise für diesen ersten Aspekt weist die Kopplungseinheit wenigstens einen Flüssigkeitskanal auf, welcher die Flüssigkeitsschnittstelle mit dem Flüssigkeitsraum verbindet. Dies hat den Vorteil, dass der Flüssigkeitsraum auf einfache Art und Weise mit Flüssigkeit versorgt werden kann, indem die von der Optikeinheit übergebene Flüssigkeit in die Öffnung in der Kopplungseinheit geleitet wird, in welche Flüssigkeit für den Flüssigkeitsraum geleitet werden kann, um von dort durch den Flüssigkeitskanal zum Flüssigkeitsraum geleitet zu werden.

Alternativ dazu besteht aber auch die Möglichkeit, dass die Kopplungseinheit keinen derartigen Flüssigkeitskanal aufweist, da der Flüssigkeitsraum andersartig mit Flüssigkeit versorgt wird. Dies kann beispielsweise der Fall sein, wenn die Öffnung in der Kopplungseinheit, durch welche Flüssigkeit für den Flüssigkeitsraum geleitet werden kann, direkt mit dem Flüssigkeitsraum verbunden ist. Eine derartige Alternative hat den Vorteil, dass der Bearbeitungskopf kompakter konstruiert werden kann, wodurch mit dem Bearbeitungskopf schwierig zugängliche Stellen einfacher erreicht werden können und eine dreidimensionale Bearbeitung von Objekten vereinfacht wird.

Bevorzugt für diesen ersten Aspekt verjüngt sich die Kopplungseinheit in eine Richtung, wobei diese Richtung im mit der Optikeinheit verbundenen Zustand der Kopplungseinheit der Strahlrichtung entspricht. Dadurch nimmt die quer zur Strahlrichtung gemessene Breite des Bearbeitungskopfs zur Stelle des Bearbeitungskopfs hin ab, an welcher der von der Düsenöffnung erzeugbare Flüssigkeitsstrahl den Bearbeitungskopf verlässt. Dadurch können mit dem Bearbeitungskopf auch schwierig zugängliche Stellen einfacher erreicht werden, was eine dreidimensionale Bearbeitung von Objekten vereinfacht.

Alternativ dazu besteht aber auch die Möglichkeit, dass sich die Kopplungseinheit nicht in eine Richtung verjüngt, welche im mit der Optikeinheit verbundenen Zustand der Kopplungseinheit der Strahlrichtung entspricht. Eine derartige Alternative kann den Vorteil haben, dass der Bearbeitungskopf einfacher konstruiert und somit kostengünstiger hergestellt werden kann.

Falls sich die Kopplungseinheit in eine Richtung verjüngt, wobei diese Richtung im mit der Optikeinheit verbundenen Zustand der Kopplungseinheit der Strahlrichtung entspricht, ist die Verjüngung vorteilhafterweise kegelmantelförmig. Dies hat den Vorteil, dass die Verjüngung in Strahlrichtung gesehen konstant gleichmässig ist. Dadurch kann der Bearbeitungskopf problemlos dem Kegelöffnungswinkel der kegelmantelförmigen Verjüngung entsprechend relativ zu einer zu bearbeitenden Fläche geneigt werden. Dies erleichtert die Erreichbarkeit von schwierig zugänglichen Stellen und vereinfacht damit die dreidimensionale Bearbeitung von Objekten.

Alternativ dazu besteht aber auch die Möglichkeit, dass die Verjüngung eine andere Form als eine Kegelmantelform aufweist.

Falls sich die Kopplungseinheit in eine Richtung kegelmantelförmig verjüngt, wobei diese Richtung im mit der Optikeinheit verbundenen Zustand der Kopplungseinheit der Strahlrichtung entspricht, weist die kegelmantelförmige Verjüngung vorzugsweise einen zwischen einer rotationssymmetrischen Mittelachse der Kegelmantelform und der Aussenfläche der Kegelmantelform gemessenen Kegelöffnungswinkel von höchstens 60°, höchstens 45°, höchstens 30°, insbesondere von höchstens 20° auf. Dies hat den Vorteil, dass schwierig zugängliche Stellen optimal erreicht werden können, was eine dreidimensionale Bearbeitung von Objekten vereinfacht.

Als Alternative dazu kann die kegelmantelförmige Verjüngung aber auch einen Kegelöffnungswinkel von mehr als 20° bzw. mehr als 30°, mehr als 45° oder mehr als 60° aufweisen. Dies hat den Vorteil, dass die Konstruktion der Kopplungseinheit vereinfacht wird.

Bevorzugt für diesen ersten Aspekt weist die Kopplungseinheit eine Gasaustrittsdüse auf, um einen den Flüssigkeitsstrahl umhüllenden Gasstrahl zu formen. Dies hat den Vorteil, dass die Länge, über welcher der Flüssigkeitsstrahl stabil ist, grösser ist. Da der Laserstrahl nur im stabilen Flüssigkeitsstrahl eingekoppelt bleibt, kann dadurch der mögliche Abstand des Bearbeitungskopfs von einer zu bearbeitenden Stelle erhöht werden. Entsprechend können dadurch mit dem Bearbeitungskopf schwierig zugängliche Stellen einfacher bearbeitet werden, was die dreidimensionale Bearbeitung von Objekten vereinfacht.

Als Alternative dazu kann die Kopplungseinheit auch keine Gasaustrittsdüse aufweisen, um einen den Flüssigkeitsstrahl umhüllenden Gasstrahl zu formen. Eine derartige Alternative hat den Vorteil, dass der Bearbeitungskopf einfacher konstruiert und entsprechend kostengünstiger hergestellt werden kann. Zudem wird dadurch die Wartung des Bearbeitungskopfs vereinfacht.

Falls die Kopplungseinheit eine Gasaustrittsdüse aufweist, um einen den Flüssigkeitsstrahl umhüllenden Gasstrahl zu formen, so weist die Kopplungseinheit zudem bevorzugt einen Gasstauraum auf, welcher im mit der Optikeinheit verbundenen Zustand der Kopplungseinheit in Strahlrichtung gesehen nach der Düsenöffnung angeordnet ist. Ein solcher Gasstauraum hat den Vorteil, dass die Erzeugung eines den Flüssigkeitsstrahl umhüllenden Gasstrahls vereinfacht wird, welcher die Länge vergrössert, über die der Flüssigkeitsstrahl stabil ist.

Alternativ dazu besteht aber auch die Möglichkeit, dass die Kopplungseinheit keinen derartigen Gasstauraum aufweist. Dies hat den Vorteil, dass die Kopplungseinheit einfacher konstruiert werden kann.

Falls die Kopplungseinheit eine Gasaustrittsdüse aufweist, um einen den Flüssigkeitsstrahl umhüllenden Gasstrahl zu formen, so ist vorzugsweise im mit der Optikeinheit verbundenen Zustand der Kopplungseinheit die Gasaustrittsdüse von der Düsenöffnung her gesehen in Strahlrichtung angeordnet. Dabei kann die Gasaustrittsdüse von der Düsenöffnung her gesehen in Strahlrichtung direkt nach der Düsenöffnung angeordnet sein. Es besteht aber auch die Möglichkeit, dass beispielsweise ein allenfalls vorhandener Gasstauraum zwischen der Düsenöffnung und der Gasaustrittsdüse angeordnet ist. In diesem Fall kann der durch die Düsenöffnung erzeugbare Flüssigkeitsstrahl in Strahlrichtung durch den Gasstauraum verlaufend durch die Gasaustrittsdüse aus der Kopplungseinheit austreten. Der Vorteil der Anordnung der Gasaustrittsdüse von der Düsenöffnung her gesehen in Strahlrichtung ist, dass der durch die Düsenöffnung erzeugbare Flüssigkeitsstrahl durch die Gasaustrittsdüse aus der Kopplungseinheit austreten kann, sodass mit der Gasaustrittsdüse ein den Flüssigkeitsstrahl optimal umhüllender Gasstrahl erzeugt werden kann.

Alternativ dazu besteht aber auch die Möglichkeit, dass die Gasaustrittsdüse anders angeordnet ist.

Falls die Kopplungseinheit eine Gasaustrittsdüse aufweist, um einen den Flüssigkeitsstrahl umhüllenden Gasstrahl zu formen, so ist bevorzugt im mit der Optikeinheit verbundenen Zustand der Kopplungseinheit zur Versorgung der Kopplungseinheit mit Gas für den Gasstrahl zwischen der Optikeinheit und der Kopplungseinheit eine Gasschnittstelle gebildet. Hierzu weist die Optikeinheit eine Öffnung auf, aus welcher Gas für den Gasstrahl aus der Optikeinheit austreten kann. Zudem weist die Kopplungseinheit eine Öffnung auf, in welche Gas für den Gasstrahl geleitet werden kann. Diese beiden Öffnungen sind im mit der Optikeinheit verbundenen Zustand der Kopplungseinheit derart zueinander angeordnet, dass aus der Öffnung in der Optikeinheit austretendes Gas in die Öffnung in der Kopplungseinheit fliessen kann. Dadurch bilden die beiden Öffnungen zusammen mit einem allenfalls zwischen der Optikeinheit und der Kopplungseinheit eingeschlossenen Bereich, in welchem aus der Öffnung in der Optikeinheit austretendes Gas zur Öffnung in der Kopplungseinheit geleitet wird, die Gasschnittstelle. Dabei können die beiden Öffnungen im mit der Optikeinheit verbundenen Zustand der Kopplungseinheit einander zugewandt direkt aufeinanderliegen. In diesem Fall bilden die beiden aufeinander liegenden Öffnungen die Gasschnittstelle. Die beiden Öffnungen können aber auch seitlich etwas zueinander versetzt angeordnet sein. Unabhängig von der Anordnung der beiden Öffnungen können die Optikeinheit und die Kopplungseinheit zudem einen Bereich einschliessen, in welchem aus der Öffnung in der Optikeinheit austretendes Gas zur Öffnung in der Kopplungseinheit geleitet wird. Dieser Bereich kann beispielsweise durch eine oder mehrere zwischen der Optikeinheit und der Kopplungseinheit angeordnete Dichtungen begrenzt sein. In diesem Fall erstreckt sich die Gasschnittstelle über diesen Bereich sowie die beiden Öffnungen.

Der Vorteil der Gasschnittstelle ist, dass der Bearbeitungskopf kompakt konstruiert werden kann, da die Kopplungseinheit keinen von der Verbindung mit der Optikeinheit separaten Anschluss für die Versorgung mit Gas für den Gasstrahl aufweisen muss. Dieser Vorteil wird unabhängig davon erreicht, ob das Gas für den Gasstrahl im gasförmigen Zustand oder in verflüssigter Form durch die Gasschnittstelle von der Optikeinheit zur Kopplungseinheit geleitet wird.

Als Alternative besteht aber auch die Möglichkeit, dass im mit der Optikeinheit verbundenen Zustand der Kopplungseinheit zur Versorgung der Kopplungseinheit mit Gas für den Gasstrahl keine Gasschnittstelle zwischen der Optikeinheit und der Kopplungseinheit gebildet ist. Eine derartige Alternative hat den Vorteil, dass die Verbindung der Kopplungseinheit mit der Optikeinheit vereinfacht wird.

Wenn im mit der Optikeinheit verbundenen Zustand der Kopplungseinheit zwischen der Optikeinheit und der Kopplungseinheit eine Gasschnittstelle zur Versorgung der Kopplungseinheit mit Gas für den Gasstrahl gebildet ist, so ist die Gasschnittstelle vorteilhafterweise für diesen ersten Aspekt in Strahlrichtung gesehen vor dem in Strahlrichtung gesehen letzten optischen Element der Optikeinheit angeordnet. Dadurch wird ein durch die Optikeinheit geleiteter Laserstrahl zuerst neben der Gasschnittstelle vorbei oder durch die Gasschnittstelle hindurch geleitet, bevor er das letzte optische Element der Optikeinheit passiert. Dies hat den Vorteil, dass kleiner konstruiert werden kann. Zudem kann dadurch der Bearbeitungskopf im Bereich, wo der Flüssigkeitsstrahl mit dem eingekoppelten Laserstrahl vom Gasstrahl umhüllt den Bearbeitungskopf verlässt, schmaler gebaut werden. Dadurch können mit dem Bearbeitungskopf schwierig zugängliche Stellen einfacher mit einem stabilen Flüssigkeitsstrahl und darin eingekoppelten Laserstrahl erreicht werden. Entsprechend wird dadurch eine dreidimensionale Bearbeitung von Objekten erleichtert.

Als Alternative dazu besteht aber auch die Möglichkeit, dass die Gasschnittstelle in Strahlrichtung gesehen auf gleicher Höhe wie das in Strahlrichtung gesehen letzte optische Element der Optikeinheit oder aber nach dem in Strahlrichtung gesehen letzten optischen Element der Optikeinheit angeordnet ist.

Falls die Kopplungseinheit eine Gasaustrittsdüse aufweist, um einen den Flüssigkeitsstrahl umhüllenden Gasstrahl zu formen, und falls im mit der Optikeinheit verbundenen Zustand der Kopplungseinheit zwischen der Optikeinheit und der Kopplungseinheit eine Gasschnittstelle zur Versorgung der Kopplungseinheit mit Gas für den Gasstrahl gebildet ist, so weist im mit der Optikeinheit verbundenen Zustand der Kopplungseinheit die Gasschnittstelle vorzugsweise eine Gasschnittstellenfläche auf, welche in einem Winkel zu einer senkrecht zur Strahlrichtung ausgerichteten Ebene ausgerichtet ist. Dabei spielt es keine Rolle, ob im mit der Optikeinheit verbundenen Zustand der Kopplungseinheit die Gasschnittstelle in Strahlrichtung gesehen vor, nach, oder auf gleicher Höhe wie das letzte optische Element der Optikeinheit angeordnet ist.

Diese Gasschnittstellenfläche verläuft durch die Gasschnittstelle und damit zwischen der Öffnung in der Optikeinheit, aus welcher Gas für den Gasstrahl aus der Optikeinheit austreten kann, und der Öffnung in der Kopplungseinheit, in welche Gas für den Gasstrahl geleitet werden kann, sowie zwischen den diese Öffnungen umgebenden Oberflächen der Optikeinheit und der Kopplungseinheit. Wenn daher die Öffnung in der Optikeinheit direkt auf der Öffnung der Kopplungseinheit liegt, sodass das von der Optikeinheit zur Kopplungseinheit geleitete Gas zur Versorgung des Gasstrahls direkt von der Öffnung in der Optikeinheit in die Öffnung der Kopplungseinheit fliesst, so ist die Gasschnittstellenfläche durch den um die beiden Öffnungen liegende Bereich der aufeinanderliegenden Oberflächen der Optikeinheit und der Kopplungseinheit definiert und verläuft im Bereich der beiden Öffnungen, wo die entsprechenden Oberflächen der Optikeinheit und der Kopplungseinheit aufgrund der Öffnungen fehlen, stetig weiter. Dabei ist unbedeutend, ob die um die beiden Öffnungen liegenden Bereiche der Oberflächen auf die Gasschnittstelle begrenzt sind, oder ob sie bis unmittelbar ausserhalb der Gasschnittstelle reichen. Wenn die Öffnung in der Optikeinheit hingegen nicht direkt auf der Öffnung der Kopplungseinheit liegt und das aus der Öffnung in der Optikeinheit austretende Gas zur Versorgung des Gasstrahls durch einen zwischen der Optikeinheit und der Kopplungseinheit eingeschlossenen Bereich zur Öffnung in der Kopplungseinheit geleitet wird, so verläuft die Gasschnittstellenfläche zwischen dem um die Öffnung in der Optikeinheit liegenden Bereich der Oberfläche der Optikeinheit und dem um die Öffnung in der Kopplungseinheit liegenden Bereich der Oberfläche der Kopplungseinheit. Wenn ein Abstand zwischen der Oberfläche der Optikeinheit und der Oberfläche der Kopplungseinheit im Bereich um die Öffnungen konstant ist und die beiden Oberflächen in diesem Bereich somit parallel zueinander verlaufen, so verläuft die Gasschnittstellenfläche parallel zur Oberfläche der Optikeinheit und parallel zur Oberfläche der Kopplungseinheit zwischen diesen beiden Oberflächen und verläuft im Bereich, wo die entsprechenden Oberflächen der Optikeinheit und der Kopplungseinheit aufgrund der beiden Öffnungen fehlen, stetig weiter. Dabei ist unbedeutend, ob die um die beiden Öffnungen liegenden Bereiche der Oberflächen auf die Gasschnittstelle begrenzt sind, oder ob sie bis unmittelbar ausserhalb der Gasschnittstelle reichen. Wenn hingegen die Oberfläche der Optikeinheit in einem Winkel zu der Oberfläche der Kopplungseinheit verläuft, so dass sich ein senkrecht zu den Oberflächen gemessener Abstand zwischen den beiden Oberflächen innerhalb der Gasschnittstelle ändert, so verläuft die Gasschnittstellenfläche zwischen diesen beiden Oberflächen. Dabei schliesst die Gasschnittstellenfläche einen gleichen Winkel zur Oberfläche der Optikeinheit und zur Oberfläche der Kopplungseinheit ein und verläuft im Bereich, wo die entsprechenden Oberflächen der Optikeinheit und der Kopplungseinheit aufgrund der Öffnungen fehlen, stetig weiter. Dabei ist ebenfalls unbedeutend, ob diese um die beiden Öffnungen liegenden Bereiche der Oberflächen auf die Gasschnittstelle begrenzt sind, oder ob sie bis unmittelbar ausserhalb der Gasschnittstelle reichen.

Da sowohl der um die Öffnung in der Optikeinheit liegende Bereich der Oberfläche der Optikeinheit als auch der um die Öffnung in der Kopplungseinheit liegende Bereich der Oberfläche der Kopplungseinheit gekrümmt sein kann, kann auch die Gasschnittstellenfläche gekrümmt sein. So kann beispielsweise die Kopplungseinheit einen zylinderförmigen Bereich aufweisen, auf dessen radialer Aussenfläche die Öffnung für die Versorgung des Gasstrahls mit Gas angeordnet ist. Zudem kann die Optikeinheit beispielsweise eine Öffnung mit kreisförmigem Querschnitt aufweisen, in welche der zylinderförmige Bereich der Kopplungseinheit geschoben werden kann, um die Kopplungseinheit mit der Optikeinheit zu verbinden. In diesem Fall kann die Öffnung in der Optikeinheit, aus welcher Gas für den Gasstrahl aus der Optikeinheit austreten kann, auf der Innenseite der Öffnung mit kreisförmigem Querschnitt angeordnet sein. Da die Gasschnittstelle somit auf dem zylinderförmigen Bereich der Kopplungseinheit liegt, folgt auch die Gasschnittstellenfläche der Form des zylinderförmigen Bereichs der Kopplungseinheit. Damit ist die Gasschnittstellenfläche in diesem Fall gekrümmt.

Dass die Gasschnittstellenfläche in einem Winkel zur senkrecht zur Strahlrichtung ausgerichteten Ebene ausgerichtet ist, bedeutet, dass innerhalb der Gasschnittstelle bei jedem Punkt der Gasschnittstellenfläche die Normale auf diesen Punkt einen Winkel zur Strahlrichtung einschliesst und damit nicht parallel zur Strahlrichtung ausgerichtet ist. Dies hat den Vorteil, dass die Gasschnittstelle auf einfache Art und Weise abgedichtet werden kann, wenn die Kopplungseinheit zur Verbindung mit der Optikeinheit entgegen der Strahlrichtung zur Optikeinheit bewegbar und damit auf einfache Art und Weise mit der Optikeinheit verbindbar ausgebildet ist. Der Grund dafür ist, dass die Gasschnittstellenfläche in einem Winkel zur Bewegungsrichtung der Kopplungseinheit ausgerichtet ist, wodurch bei der Verbindung der Kopplungseinheit mit der Optikeinheit die Öffnung in der Kopplungseinheit und die Öffnung in der Optikeinheit nicht in Richtung der Normalen des um die Öffnung in der Optikeinheit liegenden Bereichs der Oberfläche der Optikeinheit und der Normalen des um die Öffnung in der Kopplungseinheit liegenden Bereichs der Oberfläche der Kopplungseinheit, sondern in seitliche Richtung aufeinander zu bewegt werden. Dadurch kann die Gasschnittstelle einfacher abgedichtet werden.

Bevorzugt für diesen ersten Aspekt verläuft die Gasschnittstellenfläche im mit der Optikeinheit verbundenen Zustand der Kopplungseinheit parallel zur Strahlrichtung. Dies bedeutet, dass innerhalb der Gasschnittstelle bei jedem Punkt der Gasschnittstellenfläche die Normale auf diesen Punkt senkrecht zur Strahlrichtung ausgerichtet ist. Dies hat den Vorteil, dass die Gasschnittstelle auf einfache Art und Weise abgedichtet werden kann, wenn die Kopplungseinheit zur Verbindung mit der Optikeinheit entgegen der Strahlrichtung zur Optikeinheit bewegbar und damit auf einfache Art und Weise mit der Optikeinheit verbindbar ausgebildet ist, weil die Gasschnittstellenfläche dabei parallel zur Bewegungsrichtung der Kopplungseinheit ausgerichtet ist und entsprechend die Öffnung in der Kopplungseinheit entlang des um diese Öffnung liegenden Bereichs der Oberfläche der Kopplungseinheit vor die Öffnung in der Optikeinheit geschoben wird. Um diesen Vorteil zu erreichen, spielt es keine Rolle, ob die Gasschnittstellenfläche innerhalb der Gasschnittstelle ebenartig flach oder gekrümmt ist. So kann die Kopplungseinheit beispielsweise einen zylinderförmigen Bereich aufweisen, auf dessen radialer Aussenfläche die Öffnung für die Versorgung des Gasstrahls mit Gas angeordnet ist, während die Optikeinheit eine Öffnung mit kreisförmigem Querschnitt aufweist, in welche der zylinderförmige Bereich der Kopplungseinheit entgegen der Strahlrichtung geschoben werden kann, um die Kopplungseinheit mit der Optikeinheit zu verbinden. In diesem Fall kann die Öffnung in der Optikeinheit, aus welcher Gas für den Gasstrahl aus der Optikeinheit austreten kann, auf der Innenseite der Öffnung mit kreisförmigem Querschnitt angeordnet sein. Damit ist die Gasschnittstellenfläche in diesem Fall gekrümmt. Es besteht aber beispielsweise auch die Möglichkeit, dass die Kopplungseinheit einen Bereich mit quadratischem Querschnitt aufweist, wobei die Öffnung für die Versorgung des Gasstrahls mit Gas auf einer der vier flachen Aussenseiten dieses Bereichs angeordnet ist. Dabei kann die Optikeinheit eine Öffnung mit ebenfalls quadratischem Querschnitt aufweisen, in welche der Bereich der Kopplungseinheit entgegen der Strahlrichtung geschoben werden kann, um die Kopplungseinheit mit der Optikeinheit zu verbinden. In diesem Fall kann die Öffnung in der Optikeinheit, aus welcher Gas für den Gasstrahl aus der Optikeinheit austreten kann, auf der Innenseite der Öffnung mit quadratischem Querschnitt auf einer der vier flachen Seiten angeordnet sein. Damit ist die Gasschnittstellenfläche in diesem Fall ebenartig flach.

Alternativ dazu besteht aber auch die Möglichkeit, dass im mit der Optikeinheit verbundenen Zustand der Kopplungseinheit die Gasschnittstelle eine Gaschnittstellenfläche aufweist, welche zumindest in einem Bereich parallel zur senkrecht zur Strahlrichtung ausgerichteten Ebene ausgerichtet ist.

Vorteilhafterweise für diesen ersten Aspekt weist die Kopplungseinheit wenigstens einen Gaskanal auf, welcher die Gasschnittstelle mit der Gasaustrittsdüse verbindet. Dies hat den Vorteil, dass die Gasaustrittsdüse auf einfache Art und Weise mit Gas versorgt werden kann, indem das von der Optikeinheit übergebene Gas in die Öffnung in der Kopplungseinheit, in welche Gas für den Gasstrahl geleitet werden kann, geleitet wird, um von dort durch den Gaskanal zur Gasaustrittsdüse geleitet zu werden. Dabei spielt es keine Rolle, ob das Gas vom Gaskanal zuerst zum allenfalls vorhandenen Gasstauraum und dann zur Gasaustrittsdüse geleitet wird, oder ob das Gas direkt zur Gasaustrittsdüse geleitet wird.

Alternativ dazu besteht aber auch die Möglichkeit, dass die Kopplungseinheit keinen derartigen Gaskanal aufweist, da die Gasaustrittsdüse andersartig mit Gas versorgt wird. Dies kann beispielsweise der Fall sein, wenn die Öffnung in der Kopplungseinheit, durch welche Gas für den Gasstrahl geleitet werden kann, direkt mit der Gasaustrittsdüse oder dem allenfalls vorhandenen Gasstauraum verbunden ist. Eine derartige Alternative hat den Vorteil, dass der Bearbeitungskopf kompakter konstruiert werden kann, wodurch mit dem Bearbeitungskopf schwierig zugängliche Stellen einfacher erreicht werden können und eine dreidimensionale Bearbeitung von Objekten vereinfacht wird.

Falls die Kopplungseinheit eine Gasaustrittsdüse aufweist, so weist die Kopplungseinheit vorteilhafterweise eine auswechselbare Kopfspitzeneinheit auf, in welcher die Gasaustrittsdüse angeordnet ist. Dies hat den Vorteil, dass die Kopfspitzeneinheit mit der Gasaustrittsdüse auf einfache Art und Weise ersetzt werden kann, wenn die Gasaustrittsdüse Abnutzungserscheinungen zeigt und daher der von ihr erzeugbare Gasstrahl den Flüssigkeitsstrahl nicht mehr optimal umhüllt.

Alternativ dazu besteht aber auch die Möglichkeit, dass die Kopplungseinheit keine solche Kopfspitzeneinheit mit Gasaustrittsdüse aufweist.

Falls die Kopplungseinheit eine Gasaustrittsdüse und eine Kopfspitzeneinheit aufweist, wobei die Gasaustrittsdüse in der Kopfspitzeneinheit angeordnet ist, so weist die Kopfspitzeneinheit bevorzugt eine konische Aussenform auf. Da die Kopfspitzeneinheit an der Spitze des Bearbeitungskopfs angeordnet ist, hat dies den Vorteil, dass die Spitze des Bearbeitungskopfs, aus welcher der Flüssigkeitsstrahl und der Gasstrahl austreten, schmaler ist. Dadurch können mit dem Bearbeitungskopf schwierig zugängliche Stellen einfacher erreicht werden, was eine dreidimensionale Bearbeitung von Objekten vereinfacht.

Als bevorzugte Variante dieses ersten Aspekts verjüngt sich die Kopfspitzeneinheit zur Stelle hin, wo der Flüssigkeitsstrahl und der Gasstrahl aus dem Bearbeitungskopf austreten. Dies hat ebenfalls den Vorteil, dass der Bearbeitungskopf im Bereich dieser Stelle schmaler ist, wodurch mit dem Bearbeitungskopf schwierig zugängliche Stellen einfacher erreicht werden können. Entsprechend wird dadurch eine dreidimensionale Bearbeitung von Objekten vereinfacht.

Alternativ dazu besteht aber auch die Möglichkeit, dass die Kopfspitzeneinheit weder eine konische Aussenform aufweist noch sich zur Stelle hin verjüngt, an welcher der Flüssigkeitsstrahl und der Gasstrahl aus dem Bearbeitungskopf austreten.

Unabhängig davon, ob die Kopplungseinheit eine Gasaustrittsdüse und allenfalls eine auswechselbare Kopfspitzeneinheit aufweist, ist die Düse mit einer Düsenöffnung zur Erzeugung des Flüssigkeitsstrahls bevorzugt in einem auswechselbaren Düsenstein angeordnet. Dabei kann der auswechselbare Düsenstein in der den Flüssigkeitsraum begrenzenden Wand der Kopplungseinheit eingesetzt sein oder die den Flüssigkeitsraum begrenzende Wand der Kopplungseinheit bilden. Der auswechselbare Düsenstein hat den Vorteil, dass der Düsenstein mit der Düse auf einfache Art und Weise ersetzt werden kann, wenn die Düse Abnutzungserscheinungen zeigt und daher der von der Düsenöffnung erzeugbare Flüssigkeitsstrahl über eine geringere Länge stabil ist oder gar nicht mehr stabil ist.

Alternativ dazu besteht aber auch die Möglichkeit, dass die Kopplungseinheit keinen auswechselbaren Düsenstein umfasst, in welchem die Düse mit der Düsenöffnung zur Erzeugung des Flüssigkeitsstrahls angeordnet ist.

Vorteilhafterweise für diesen ersten Aspekt weist die Kopplungseinheit einen Hohlraum auf, welcher auf einer Seite offen ist und in welchen die Optikeinheit im mit der Optikeinheit verbundenen Zustand der Kopplungseinheit hineinragt. Dies hat den Vorteil, dass die Kopplungseinheit auf einfache Art und Weise mit der Optikeinheit verbindbar ist. Ausserdem hat dies den Vorteil, dass sich das in Strahlrichtung gesehen letzte optische Element der Optikeinheit im mit der Optikeinheit verbundenen Zustand der Kopplungseinheit in diesem Hohlraum befinden kann und entsprechend durch die Kopplungseinheit nach aussen geschützt sein kann. Dabei kann das in Strahlrichtung gesehen letzte optische Element der Optikeinheit aber dennoch leicht zugänglich sein, wenn die Kopplungseinheit von der Optikeinheit entfernt wird.

Alternativ dazu besteht aber auch die Möglichkeit, dass die Kopplungseinheit keinen derartigen, auf eine Seite offenen Hohlraum aufweist.

Unabhängig davon, ob die Kopplungseinheit einen Hohlraum aufweist, welcher auf eine Seite offen ist und in welchen die Optikeinheit im mit der Optikeinheit verbundenen Zustand der Kopplungseinheit hineinragt, bildet die Optikeinheit bevorzugt eine Muffe und umschliesst die Kopplungseinheit an der Flüssigkeitsschnittstelle. Dadurch befindet sich die Flüssigkeitsschnittstelle auf der Innenseite der Muffe. Dies führt dazu, dass sich die Öffnung, aus welcher Flüssigkeit für den Flüssigkeitsraum aus der Optikeinheit austreten kann, auf der Innenseite der Muffe befindet. Entsprechend ist die Öffnung, aus welcher Flüssigkeit für den Flüssigkeitsraum aus der Optikeinheit austreten kann, besser geschützt, wenn die Kopplungseinheit nicht mit der Optikeinheit verbunden ist. Ausserdem hat die Muffe den Vorteil, dass eine Verbindung der Kopplungseinheit mit der Optikeinheit besser geführt ist.

Alternativ dazu besteht aber auch die Möglichkeit, dass die Optikeinheit keine Muffe bildet oder dass die Optikeinheit die Kopplungseinheit an der Flüssigkeitsschnittstelle nicht umschliesst.

Vorteilhafterweise für diesen ersten Aspekt ist der Flüssigkeitsraum auf einer Seite mit einem für das Laserlicht des Laserstrahls transparenten Element abgeschlossen, wobei im mit der Optikeinheit verbundenen Zustand der Kopplungseinheit das transparente Element in Strahlrichtung vor dem Flüssigkeitsraum angeordnet ist. Dies hat den Vorteil, dass der von der Optikeinheit fokussierbare Laserstrahl durch das transparente Element in den Flüssigkeitsraum geleitet werden kann, sodass das Einkoppeln des Laserstrahls in den Flüssigkeitsstrahl erleichtert wird.

Als Alternative dazu besteht aber auch die Möglichkeit, dass der Flüssigkeitsraum nicht auf einer Seite mit einem für das Laserlicht des Laserstrahls transparenten Element abgeschlossen ist.

Vorzugsweise für diesen ersten Aspekt weist die Düsenöffnung einen Durchmesser im Bereich von 20µm bis 150µm auf. Dies hat den Vorteil, dass die Düse kostengünstig hergestellt werden kann und dennoch eine Düsenöffnung mit geringem Durchmesser aufweist. Besonders bevorzugt weist die Düsenöffnung einen Durchmesser im Bereich von 40µm bis 80µm auf. Dies hat den Vorteil, dass mit der Düsenöffnung ein Flüssigkeitsstrahl erzeugt werden kann, welcher einen Durchmesser aufweist, in welchen der Laserstrahl optimal eingekoppelt werden kann. In einer weiteren bevorzugten Variante weist die Düsenöffnung einen Durchmesser von weniger als 40µm, besonders bevorzugt von weniger als 30µm bzw. weniger als 20µm auf. Dies hat den Vorteil, dass ein Flüssigkeitsstrahl mit sehr geringem Durchmesser erzeugt werden kann, wodurch eine feinere und präzisere Bearbeitung von Objekten ermöglicht wird.

Alternativ dazu besteht aber auch die Möglichkeit, dass die Düsenöffnung einen Durchmesser mehr als 80µm bzw. mehr als 150µm aufweist.

Vorteilhafterweise für diesen ersten Aspekt ist der Laserstrahl durch die Optikeinheit auf einen Fokuspunkt fokussierbar, welcher einen höchstens zwei Drittel, besonders bevorzugt höchstens halb so grossen Durchmesser wie der Durchmesser der Düsenöffnung aufweist. Das bedeutet, dass beim Fokuspunkt mindestens 95% der Energie des Laserstrahls eine senkrecht zur Strahlrichtung ausgerichtete Fläche innerhalb eines Kreises passiert, dessen Durchmesser bevorzugt höchstens zwei Drittel, besonders bevorzugt höchstens halb so gross wie der Durchmesser der Düsenöffnung ist. In einer vorteilhaften Variante davon passieren mindestens 98% der Energie des Laserstrahls die Fläche innerhalb dieses Kreises. Dies hat den Vorteil, dass der Laserstrahl optimal in den durch die Düsenöffnung erzeugbaren Flüssigkeitsstrahl eingekoppelt werden kann.

Alternativ dazu besteht aber auch die Möglichkeit, dass der Laserstrahl durch die Optikeinheit auf einen Fokuspunkt fokussierbar ist, dessen Durchmesser grösser als halb so gross oder grösser als zwei Drittel des Durchmessers der Düsenöffnung ist.

Bevorzugt umfasst eine Flüssigkeitsstrahl-Laserbearbeitungsmaschine einen Bearbeitungskopf gemäss dem ersten Aspekt. Es besteht aber auch die Möglichkeit, dass der Bearbeitungskopf separat von der Flüssigkeitsstrahl-Laserbearbeitungsmaschine hergestellt, vertrieben und gelagert wird.

Falls eine Flüssigkeitsstrahl-Laserbearbeitungsmaschine einen Bearbeitungskopf gemäss dem ersten Aspekt umfasst, so umfasst sie zudem vorteilhafterweise einen Laser zur Erzeugung eines Laserstrahls, welcher durch die Optikeinheit mit dem wenigstens einen optischen Element fokussierbar ist, und welcher in einem mit der Optikeinheit verbundenen Zustand der Kopplungseinheit durch die Optikeinheit in die Strahlrichtung durch den Flüssigkeitsraum der Kopplungseinheit hindurch in die Düsenöffnung richtbar ist und in den von der Düse erzeugbaren, in Strahlrichtung laufenden Flüssigkeitsstrahl einkoppelbar ist. Es besteht aber auch die Möglichkeit, dass die Flüssigkeitsstrahl-Laserbearbeitungsmaschine keinen solchen Laser, sondern nur einen Eingang für einen von einem separaten Laser erzeugbaren Laserstrahl umfasst. Dabei kann der Eingang je nach Bedarf unterschiedlich ausgebildet sein. So kann er beispielsweise ein Fenster, eine Linse oder einen Spiegel umfassen, um den Laserstrahl in die Flüssigkeitsstrahl-Laserbearbeitungsmaschine zu leiten, wo der Laserstrahl weiter zum Bearbeitungskopf geführt werden kann. Es kann sich beim Eingang aber auch um eine Kopplungsstelle zum Anbringen eines optischen Leiters handeln, um den vom separaten Laser mittels einem optischen Leiter zur Flüssigkeitsstrahl-Laserbearbeitungsmaschine geführten Laserstrahl in die Flüssigkeitsstrahl-Laserbearbeitungsmaschine zu leiten, wo der Laserstrahl weiter zum Bearbeitungskopf geführt werden kann.

Unabhängig davon, ob die Flüssigkeitsstrahl-Laserbearbeitungsmaschine einen Laser umfasst, oder ob der Laserstrahl von einem separaten Laser erzeugt und der Flüssigkeitsstrahl-Laserbearbeitungsmaschine durch einen Eingang zugeführt wird, umfasst die Flüssigkeitsstrahl-Laserbearbeitungsmaschine eine Kollimationseinheit. Dies hat den Vorteil, dass der Laserstrahl optimal kollimiert werden kann, bevor er im Bearbeitungskopf in den Flüssigkeitsstrahl eingekoppelt wird.

Einzelne optische Elemente der Kollimationseinheit oder die gesamte Kollimationseinheit sind bewegbar, bevorzugt sowohl in Strahlrichtung als auch entgegen der Strahlrichtung. Dabei bedeutet der Begriff "Strahlrichtung" die Richtung, in welche der Laserstrahl im Bereich der Kollimationseinheit ausgerichtet ist. Falls der Laserstrahl zwischen der Kollimationseinheit und der Optikeinheit des Bearbeitungskopfs beispielsweise mittels eines Spiegels umgelenkt wird, so kann die Strahlrichtung im Bereich der Kollimationseinheit auch von der Strahlrichtung innerhalb des Bearbeitungskopfs abweichen. Unabhängig davon hat die Bewegbarkeit einzelner Elemente der Kollimationseinheit oder der gesamten Kollimationseinheit in und entgegen der Strahlrichtung den Vorteil, dass der Laserstrahl im Bearbeitungskopf optimal in den Flüssigkeitsstrahl eingekoppelt werden kann, wobei die Optikeinheit des Bearbeitungskopfs keine beweglichen optischen Elemente oder zumindest weniger bewegliche optische Elemente aufweist. Dies ermöglicht es, den Bearbeitungskopf einfacher, kleiner und kompakter zu konstruieren, wodurch der Bearbeitungskopf kostengünstiger hergestellt werden kann. Zudem wird durch den kompakteren Bearbeitungskopf die dreidimensionale Bearbeitung von Objekten erleichtert.

Grundsätzlich kann eine Flüssigkeitsstrahl-Laserbearbeitungsmaschine, welche einen Bearbeitungskopf gemäss dem ersten Aspekt umfasst, beliebig ausgebildet sein, solange sie die Merkmale einer Flüssigkeitsstrahl-Laserbearbeitungsmaschine gemäss der nachfolgend beschriebenen Erfindung aufweist.

### Darstellung der Erfindung

Die Aufgabe der Erfindung ist es, eine Flüssigkeitsstrahl-Laserbearbeitungsmaschine zu schaffen, welche das Einkoppeln des Laserstrahls in den Flüssigkeitsstrahl vereinfacht. Ausserdem ist es die Aufgabe der Erfindung, ein Verfahren zum Fokussieren eines Laserstrahls in eine Düsenöffnung einer Düse in einer derartigen Flüssigkeitsstrahl-Laserbearbeitungsmaschine bereitzustellen. Dabei sollte dieses Verfahren ebenfalls das Einkoppeln des Laserstrahls in den Flüssigkeitsstrahl vereinfachen.

Die Lösung der Aufgabe ist durch die Merkmale des Anspruchs 1 definiert. Gemäss der Erfindung umfasst die Flüssigkeitsstrahl-Laserbearbeitungsmaschine einen Bearbeitungskopf zum Einkoppeln eines Laserstrahls in einen Flüssigkeitsstrahl, wobei der Bearbeitungskopf eine Düse mit einer Düsenöffnung zur Erzeugung des Flüssigkeitsstrahls aufweist, und der Laserstrahl durch eine Fokussiereinrichtung in einen Eingang der Düsenöffnung fokussierbar ist, um den Laserstrahl in den Flüssigkeitsstrahl einzukoppeln. Dabei umfasst die Flüssigkeitsstrahl-Laserbearbeitungsmaschine einen zweidimensionalen Bildsensor zum Abbilden eines Bereichs der Düse um den Eingang der Düsenöffnung herum. Zudem ist der Laserstrahl auf einen Eingang der Düsenöffnung defokussierbar, sodass Laserlicht des Laserstrahls vom Bereich der Düse um den Eingang der Düsenöffnung herum zum Bildsensor reflektiert wird, damit mit dem Bildsensor eine Abbildung des Bereichs der Düse um den Eingang der Düsenöffnung herum aufnehmbar ist, in welcher der Eingang der Düsenöffnung erkennbar ist. Vorteilhafterweise umfasst die Flüssigkeitsstrahl-Laserbearbeitungsmaschine einen Laser zur Erzeugung des Laserstrahls. In einer ebenso vorteilhaften Variante umfasst die Flüssigkeitsstrahl-Laserbearbeitungsmaschine keinen solchen Laser, sondern einen Eingang für einen von einem separaten Laser erzeugbaren Laserstrahl. Dabei kann der Eingang je nach Bedarf unterschiedlich ausgebildet sein. So kann er beispielsweise ein Fenster, eine Linse oder einen Spiegel umfassen, um den Laserstrahl in die Flüssigkeitsstrahl-Laserbearbeitungsmaschine zu leiten, wo der Laserstrahl weiter zum Bearbeitungskopf geführt werden kann. Es kann sich beim Eingang aber auch um eine Kopplungsstelle zum Anbringen eines optischen Leiters handeln, um den vom separaten Laser mittels einem optischen Leiter zur Flüssigkeitsstrahl-Laserbearbeitungsmaschine geführten Laserstrahl in die Flüssigkeitsstrahl-Laserbearbeitungsmaschine zu leiten, wo der Laserstrahl weiter zum Bearbeitungskopf geführt werden kann.

Das erfindungsgemässe Verfahren zum Fokussieren eines Laserstrahls in eine Düsenöffnung einer Düse in einer derartigen Flüssigkeitsstrahl-Laserbearbeitungsmaschine, um den Laserstrahl in einen von der Düsenöffnung erzeugten Flüssigkeitsstrahl einzukoppeln, umfasst einen ersten Schritt, in welchem der Laserstrahl auf einen Eingang der Düsenöffnung defokussiert wird, sodass Laserlicht des Laserstrahls vom Bereich der Düse um den Eingang der Düsenöffnung herum zu einem zweidimensionalen Bildsensor reflektiert wird. Dabei wird mit dem Bildsensor eine Abbildung des Bereichs der Düse um den Eingang der Düsenöffnung herum aufgenommen, in welcher der Eingang der Düsenöffnung zu erkennen ist. Dass das Laserlicht des Laserstrahls vom Bereich der Düse um den Eingang der Düsenöffnung herum zum zweidimensionalen Bildsensor "reflektiert" wird, ist in diesem Zusammenhang breit zu verstehen. Der Bereich der Düse um den Eingang der Düsenöffnung herum kann beispielsweise reflektierend im Sinne eines reflektierenden Spiegels ausgebildet sein und einen grossen Anteil des Laserlichts reflektieren. Der Bereich der Düse um den Eingang der Düsenöffnung herum kann aber beispielsweise auch nur sehr schwach reflektierend oder diffus streuend ausgebildet sein. Es reicht aus, wenn zumindest ein kleiner Anteil Laserlicht des Laserstrahls vom Bereich der Düse um den Eingang der Düsenöffnung herum zum zweidimensionalen Bildsensor reflektiert wird. Es reicht daher aus, wenn der Bereich der Düse um den Eingang der Düsenöffnung herum durch den defokussierten Laserstrahl ausreichend beleuchtet ist, sodass genügend Laserlicht des Laserstrahls vom beleuchteten Bereich der Düse um den Eingang der Düsenöffnung herum zum Bildsensor zurückgeworfen wird, sodass der Eingang der Düsenöffnung in einer Abbildung des Bereichs der Düse um den Eingang der Düsenöffnung herum zu erkennen ist. Der Anteil des zurückgeworfenen bzw. reflektierten Laserlichts kann dabei gross oder aber auch nur sehr gering sein, solange der Eingang der Düsenöffnung in einer Abbildung des Bereichs der Düse um den Eingang der Düsenöffnung herum zu erkennen ist.

Vorteilhafterweise ist der Bearbeitungskopf dieser Flüssigkeitsstrahl-Laserbearbeitungsmaschine und der bei diesem Verfahren eingesetzten Flüssigkeitsstrahl-Laserbearbeitungsmaschine ein Bearbeitungskopf gemäss dem vorgängig beschriebenen ersten Aspekt. Dadurch werden die Vorteile des ersten Aspektes sowie die in der Erfindung genannten Vorteile erreicht. Der Bearbeitungskopf kann aber auch beliebig anders ausgebildet sein, solange er eine Düse mit einer Düsenöffnung zur Erzeugung eines Flüssigkeitsstrahls aufweist und dem Zweck des Einkoppelns eines Laserstrahls in den Flüssigkeitsstrahl dient. In diesem Fall werden die zur Erfindung genannten Vorteile erreicht.

Weiter kann die Fokussiereinrichtung, durch welche der Laserstrahl in den Eingang der Düsenöffnung fokussierbar ist, beliebig ausgebildet sein und auch mehrere Elemente umfassen. So kann sie beispielsweise eine Optikeinheit umfassen, wie sie der vorgängig beschriebene Bearbeitungskopf aufweist. Sie kann aber auch eine gänzlich anders ausgebildete Optikeinheit umfassen. Zudem kann sie beispielsweise eine Kollimationseinheit umfassen, welche dazu dient, den Laserstrahl zu einem parallelen oder annähernd parallelen Strahl zu kollimieren, welcher durch die Optikeinheit in den Eingang der Düsenöffnung fokussierbar ist.

Für die Erfindung ist unerheblich, wie der Laserstrahl auf einen Eingang der Düsenöffnung defokussierbar ist. Wichtig ist einzig, dass der Laserstrahl derart defokussierbar ist, dass das Laserlicht des defokussierten Laserstrahls vom Bereich der Düse um den Eingang der Düsenöffnung herum zum Bildsensor reflektiert wird. Daher kann die Flüssigkeitsstrahl-Laserbearbeitungsmaschine beispielsweise ein in und aus dem Strahlengang des Laserstrahls bewegbares optisches Element umfassen, welches im Strahlengang angeordnet den Laserstrahl diffus streut, um den Laserstrahl auf den Eingang der Düsenöffnung zu defokussieren. Dabei kann das optische Element den Laserstrahl diffus transmittieren oder diffus reflektieren. Es besteht aber auch die Möglichkeit, dass die Flüssigkeitsstrahl-Laserbearbeitungsmaschine kein derartig diffus streuendes optisches Element aufweist, sondern dass der Fokuspunkt des Laserstrahls durch die Fokussiereinrichtung derart in Strahlrichtung gesehen vor oder hinter den Eingang der Düsenöffnung fokussierbar ist, dass das Laserlicht des Laserstrahls auf den Bereich der Düse um den Eingang der Düsenöffnung herum defokussiert ist und von diesem Bereich zum Bildsensor reflektiert wird, damit mit dem Bildsensor eine Abbildung des Bereichs der Düse um den Eingang der Düsenöffnung herum aufgenommen werden kann, in welcher der Eingang der Düsenöffnung erkennbar ist.

Bei der Abbildung, welche mit dem Bildsensor aufnehmbar ist, kann es sich um ein einzelnes Bild oder um eine Abfolge von Bildern wie beispielsweise bei einem Film handeln. Entsprechend gibt es verschiedene Möglichkeiten, wie der Bildsensor ausgebildet sein kann. So kann er beispielsweise die Aufnahme von Einzelbildern oder die Aufnahme von einer Abfolge von Bildern bzw. die Aufnahme von Filmen ermöglichen. Beispielsweise kann der Bildsensor eine CCD-Kamera oder eine andere Art von Kamera sein. Unabhängig von der Bauart des Bildsensors ist vorteilhaft, wenn der Bildsensor für Licht des vom Bereich der Düse um den Eingang der Düsenöffnung herum reflektierten Laserlichts des Laserstrahls empfindlich ist. Dies erleichtert die Erkennbarkeit des Eingangs der Düsenöffnung in der Abbildung, da die Düsenöffnung im Gegensatz zum umliegenden Bereich der Düse kein Laserlicht des Laserstrahls reflektiert. Entsprechend erscheint dadurch die Düsenöffnung in der Abbildung dunkel bzw. als nicht beleuchteter Bereich.

Unabhängig davon, wie der Bildsensor genau ausgebildet ist, hat die Lösung der Erfindung den Vorteil, dass das Verfahren sowie die Flüssigkeitsstrahl-Laserbearbeitungsmaschine keine zusätzliche Lichtquelle erfordern, mit welcher der Bereich der Düse um den Eingang der Düsenöffnung herum ausgeleuchtet werden kann, um mit dem Bildsensor eine Abbildung des Bereichs der Düse um den Eingang der Düsenöffnung herum aufzunehmen. Entsprechend wird mit der Lösung sowohl die Flüssigkeitsstrahl-Laserbearbeitungsmaschine als auch das Verfahren zum Fokussieren des Laserstrahls in die Düsenöffnung der Düse vereinfacht.

Vorzugsweise umfasst die Flüssigkeitsstrahl-Laserbearbeitungsmaschine einen ersten Spiegel zum Umlenken des Laserstrahls und einen zweiten Spiegel zum Umlenken des Laserstrahls, wobei der erste Spiegel nur um eine erste Achse durch einen ersten Motor angetrieben schwenkbar ist und der zweite Spiegel nur um eine zweite Achse durch einen zweiten Motor angetrieben schwenkbar ist, wobei die erste Achse derart zur zweiten Achse ausgerichtet ist, dass durch eine Schwenkbewegung des ersten Spiegels um die erste Achse der Laserstrahl entlang einer ersten Geraden über den Bereich der Düse um den Eingang der Düsenöffnung herum bewegbar ist, während durch eine Schwenkbewegung des zweiten Spiegels um die zweite Achse der Laserstrahl entlang einer zweiten Geraden über den Bereich der Düse um den Eingang der Düsenöffnung herum bewegbar ist, wobei die erste und die zweite Geraden in einem Winkel zueinander angeordnet sind und sich daher schneiden. Dabei können die Geraden vollständig gerade sein oder geringfügige Krümmungen aufweisen. Diese Krümmungen können beispielsweise durch Verzerrungen in der Optik verursacht sein, mit welcher der Laserstrahl auf den Fokussierpunkt fokussiert wird. Unabhängig davon haben die beiden Spiegel mit ihren angetriebenen Schwenkbewegungen den Vorteil, dass sie ein kontrolliertes Bewegen des Fokuspunkts des Laserstrahls über den Bereich der Düse um den Eingang der Düsenöffnung sowie über den Eingang der Düsenöffnung vereinfachen.

In einer bevorzugten Variante davon sind die erste und die zweite Geraden im Wesentlichen rechtwinklig zueinander angeordnet. Dies hat den Vorteil, dass eine optimal kontrollierte Bewegung des Fokuspunkts des Laserstrahls über den Bereich der Düse um den Eingang der Düsenöffnung sowie über den Eingang der Düsenöffnung ermöglicht wird.

In einer bevorzugten Variante davon umfasst die Flüssigkeitsstrahl-Laserbearbeitungsmaschine einen ersten Spiegel zum Umlenken des Laserstrahls und einen zweiten Spiegel zum Umlenken des Laserstrahls, wobei der erste Spiegel nur um eine erste Achse durch einen ersten Motor angetrieben schwenkbar ist und der zweite Spiegel nur um eine zweite Achse durch einen zweiten Motor angetrieben schwenkbar ist, wobei die erste Achse und die zweite Achse im Wesentlichen rechtwinklig zueinander angeordnet sind. Dies hat ebenfalls den Vorteil, dass sie ein kontrolliertes Bewegen des Fokuspunkts des Laserstrahls über den Bereich der Düse um den Eingang der Düsenöffnung sowie über den Eingang der Düsenöffnung vereinfachen.

Alternativ dazu besteht aber auch die Möglichkeit, dass die Flüssigkeitsstrahl-Laserbearbeitungsmaschine keinen derartigen ersten und zweiten Spiegel umfasst, sondern dass der Fokuspunkt des Laserstrahls andersartig über den Bereich der Düse um den Eingang der Düsenöffnung sowie über den Eingang der Düsenöffnung bewegbar ist. So kann die Flüssigkeitsstrahl-Laserbearbeitungsmaschine beispielsweise auch einen Spiegel zum Umlenken des Laserstrahls umfassen, welcher um eine erste Achse und um eine zweite Achse durch einen oder zwei Motoren angetrieben schwenkbar ist, wobei die erste Achse derart zur zweiten Achse ausgerichtet ist, dass durch eine Schwenkbewegung des Spiegels um die erste Achse der Laserstrahl entlang einer ersten Geraden über den Bereich der Düse um den Eingang der Düsenöffnung herum bewegbar ist, während durch eine Schwenkbewegung des Spiegels um die zweite Achse der Laserstrahl entlang einer zweiten Geraden über den Bereich der Düse um den Eingang der Düsenöffnung herum bewegbar ist, wobei die erste und die zweite Geraden in einem Winkel zueinander angeordnet sind und sich daher schneiden.

Gemäß der Erfindung umfasst die Fokussiereinrichtung eine Kollimationseinheit zur Kollimation des Laserstrahls zu einem parallelen oder annähernd parallelen Strahl und eine Optikeinheit zum Fokussieren des parallelen oder annähernd parallelen Strahls auf einen Fokuspunkt. Dies hat den Vorteil, dass eine optimale Fokussierung des Laserstrahls erreicht werden kann.

Da die Fokussiereinrichtung eine Kollimationseinheit zur Kollimation des Laserstrahls zu einem parallelen oder annähernd parallelen Strahl und eine Optikeinheit zum Fokussieren des parallelen oder annähernd parallelen Strahls auf einen Fokuspunkt umfasst, so ist gemäß der Erfindung die gesamte Kollimationseinheit oder sind bevorzugt einzelne optische Elemente der Kollimationseinheit bewegbar, um die Kollimation des Laserstrahls zu ändern und dadurch eine Distanz des Fokuspunkts des Laserstrahls zur Optikeinheit zu ändern.

In einer bevorzugten Variante davon ist die gesamte Kollimationseinheit oder sind einzelne optische Elemente der Kollimationseinheit sowohl in Strahlrichtung als auch entgegen zur Strahlrichtung bewegbar, um die Kollimation des Laserstrahls zu ändern und dadurch eine Distanz des Fokuspunkts des Laserstrahls zur Optikeinheit zu ändern.

In einer weiteren bevorzugten Variante dazu ist die Kollimation des Laserstrahls andersartig verstellbar. So kann die Kollimationseinheit beispielsweise wenigstens eine deformierbare Linse umfassen, um die Kollimation des Laserstrahls zu ändern und dadurch die Distanz des Fokuspunkts des Laserstrahls zur Optikeinheit zu ändern.

In den vorgenannten Varianten bedeutet eine Änderung der Kollimation, dass eine Form des Laserstrahls nach der Kollimationseinheit mittels der Kollimationseinheit geändert wird. So kann der Laserstrahl zwischen der Kollimationseinheit und der Optikeinheit beispielsweise perfekt kollimiert sein, sodass die Lichtstrahlen des Laserstrahls exakt parallel zueinander verlaufen. Der Laserstrahl kann zwischen der Kollimationseinheit und der Optikeinheit aber auch nicht perfekt kollimiert sein, sodass die Lichtstrahlen des Laserstrahls leicht konvergent oder leicht divergent zueinander verlaufen. Bei einer Änderung der Kollimation des Laserstrahls wird der Verlauf dieser Parallelität, Konvergenz oder Divergenz der Lichtstrahlen des Laserstrahls zwischen der Kollimationseinheit und der Optikeinheit geändert. Durch diese Änderung wird bei einer unbewegten, statischen Optikeinheit die Distanz des Fokuspunkts des Laserstrahls zur Optikeinheit verändert und kann präzise justiert werden. Dabei wird gemäss der Erfindung eine unbewegliche, statische Optikeinheit verwendet. Diese kann kompakter konstruiert werden als eine Optikeinheit mit beweglichen Elementen zum Verstellen der Distanz des Fokuspunkts des Laserstrahls zur Optikeinheit. Eine solche unbewegliche, statische Optikeinheit kann daher näher am Eingang der Düsenöffnung platziert werden. Dadurch kann der Laserstrahl auf einen Fokuspunkt mit quer zur Strahlrichtung gemessen kleinerem Durchmesser fokussiert werden. Entsprechend hat die Änderung der Kollimation des Laserstrahls den Vorteil, dass der Laserstrahl in einen Flüssigkeitsstrahl mit kleinerem Querschnitt eingekoppelt werden kann. Ein kleinerer Querschnitt des Flüssigkeitsstrahls wiederum ermöglicht eine präzisere Bearbeitung von zu bearbeitenden Objekten.

Da die Kollimation des Laserstrahls mittels der Kollimationseinheit geändert werden kann, um eine Distanz des Fokuspunkts des Laserstrahls zur Optikeinheit zu ändern, so ist der Fokuspunkt des Laserstrahls vorzugsweise im Eingang der Düsenöffnung positionierbar, um den Laserstrahl zum Einkoppeln in den Flüssigkeitsstrahl in den Eingang der Düsenöffnung zu fokussieren. Vorzugsweise ist der Fokuspunkt des Laserstrahls ausserdem weiter weg von der Optikeinheit als der Eingang der Düsenöffnung positionierbar, um den Laserstrahl auf den Eingang der Düsenöffnung zu defokussieren, sodass Laserlicht des Laserstrahls vom Bereich der Düse um den Eingang der Düsenöffnung herum zum Bildsensor reflektiert wird, damit mit dem Bildsensor eine Abbildung des Bereichs der Düse um den Eingang der Düsenöffnung herum aufnehmbar ist, in welcher der Eingang der Düsenöffnung erkennbar ist. Dies hat den Vorteil, dass der Laserstrahl auf einfache Art und Weise in den Flüssigkeitsstrahl eingekoppelt werden kann und auf einfache Art und Weise defokussiert werden kann, um mit dem Bildsensor eine Aufnahme des Bereichs der Düse um den Eingang der Düsenöffnung herum aufzunehmen.

Alternativ dazu besteht aber auch die Möglichkeit, dass der Fokuspunkt des Laserstrahls nicht mittels Änderung der Kollimation des Laserstrahls im Eingang der Düsenöffnung sowie weiter weg von der Optikeinheit als der Eingang der Düsenöffnung positioniert werden kann. So kann der Fokuspunkt des Laserstrahls beispielsweise durch eine Änderung der Kollimation des Laserstrahls im Eingang der Düsenöffnung sowie näher an der Optikeinheit als der Eingang der Düsenöffnung positionierbar sein.

Das Verfahren zum Fokussieren eines Laserstrahls in der Düsenöffnung der Düse in der Flüssigkeitsstrahl-Laserbearbeitungsmaschine umfasst vorteilhafterweise einen zweiten Schritt, in welchem die Düsenöffnung in der vom Bildsensor aufgenommenen Abbildung mit einer Markierung markiert wird, welche auf eine andere mit dem Bildsensor aufgenommene Abbildung übertragbar ist, um in dieser anderen Abbildung die Position der Düsenöffnung festzustellen. Dabei kann die Markierung eine virtuell oder physisch auf eine andere Abbildung übertragbare Maske sein. Die Markierung kann aber durch die Koordinaten der Position der Düsenöffnung in der vom Bildsensor aufgenommenen Abbildung gegeben sein, aufgrund welcher die Position der Düsenöffnung in einer anderen mit dem Bildsensor aufgenommenen Abbildung feststellbar ist. Falls es sich beim Bildsensor um eine CCD-Kamera handelt, kann die Markierung somit die Angabe der Pixel der Kamera sein, im Bereich deren sich die Düsenöffnung in der Abbildung befindet. Unabhängig von der konkreten Form der Markierung hat dies den Vorteil, dass in einer Abbildung, in welcher die Düsenöffnung nicht erkennbar ist, die Position der Düsenöffnung mittels der Markierung gekennzeichnet werden kann. Entsprechend ermöglicht dies, in einer Abbildung, welche mit dem Bildsensor zu einem Zeitpunkt aufgenommen wurde, als der Laserstrahl nicht auf den Eingang der Düsenöffnung defokussiert war, die Position der Düsenöffnung festzustellen. Falls der Laserstrahl bei der Aufnahme dieser Abbildung auf einen Punkt auf dem Bereich der Düse um den Eingang der Düsenöffnung herum fokussiert war, so kann dabei zudem festgestellt werden, wo der Fokuspunkt des Laserstrahls zum Zeitpunkt der Aufnahme der Abbildung relativ zum Eingang der Düsenöffnung positioniert war.

Alternativ dazu besteht aber auch die Möglichkeit, dass das Verfahren keinen derartigen zweiten Schritt umfasst.

Falls das Verfahren einen zweiten Schritt umfasst, in welchem die Düsenöffnung in der vom Bildsensor aufgenommenen Abbildung mit einer Markierung markiert wird, welche auf eine andere Abbildung des Bildsensors übertragbar ist, um in dieser anderen Abbildung die Position der Düsenöffnung festzustellen, wird die Markierung vorteilhafterweise mit zwei geraden, sich rechtwinklig schneidenden Linien ergänzt, deren Schnittpunkt in einem Zentrum der Düsenöffnung angeordnet ist. Dies hat den Vorteil, dass bei der Übertragung der Markierung auf eine andere Abbildung einfacher festgestellt werden kann, wo der Fokuspunkt des Laserstrahls bei der Aufnahme dieser anderen Abbildung relativ zum Eingang der Düsenöffnung positioniert war.

In einer bevorzugten Variante davon wird die Markierung mit einer oder mehreren anderen Linien ergänzt, welche es vereinfachen, in einer anderen Abbildung die Positionierung des Fokuspunkts des Laserstrahls relativ zum Eingang der Düsenöffnung festzustellen.

Alternativ dazu besteht aber auch die Möglichkeit, dass die Markierung nicht mit zusätzlichen Linien ergänzt wird.

Bevorzugt umfasst das Verfahren einen weiteren Schritt, in welchem der Laserstrahl auf eine Position auf den Bereich der Düse um den Eingang der Düsenöffnung herum fokussiert wird und mit dem Bildsensor eine weitere Abbildung des Bereichs der Düse um den Eingang der Düsenöffnung herum aufgenommen wird. Vorteilhafterweise wird dabei die Leistung des Laserstrahls reduziert, um den Bereich der Düse um den Eingang der Düsenöffnung herum nicht mit dem Laserstrahl zu beschädigen. Falls das Material der Düse um den Eingang der Düsenöffnung hingegen vom fokussierten Laserstrahl mit voller Leistung nicht beschädigt wird, so kann der Laserstrahl auch mit voller Leistung auf eine Position auf den Bereich der Düse um den Eingang herum fokussiert werden. Unabhängig von der Leistung des Laserstahls hat dieser Schritt den Vorteil, dass durch die Aufnahme von einer oder mehreren weiteren Abbildungen mit dem Bildsensor überprüft werden kann, wie gut der Laserstrahl auf den Bereich der Düse um den Eingang der Düsenöffnung herum fokussiert ist. Durch allfälliges Wiederholen des Schritts wird ermöglicht, den Fokuspunkt auf eine gleiche Ebene wie der Bereich der Düse um den Eingang der Düsenöffnung herum einzustellen. Der Schritt hat ausserdem den Vorteil, dass festgestellt werden kann, wie der Fokuspunkt des Laserstrahls relativ zum Eingang der Düsenöffnung positioniert ist. Wenn zudem bekannt ist, wie der Fokuspunkt in eine bestimmte Distanz und in eine bestimmte Richtung über den Bereich der Düse um den Eingang der Düsenöffnung bewegt werden kann, so kann dadurch der Fokuspunkt des Laserstrahls im Eingang der Düsenöffnung positioniert werden, um den Laserstrahl in den Flüssigkeitsstrahl einzukoppeln.

Alternativ dazu besteht aber auch die Möglichkeit, dass das Verfahren keinen derartigen Schritt umfasst.

Falls das Verfahren den zweiten Schritt umfasst, in welchem die Düsenöffnung in der vom Bildsensor aufgenommenen Abbildung mit einer Markierung markiert wird, welche auf eine andere Abbildung des Bildsensors übertragbar ist, um in dieser anderen Abbildung die Position der Düsenöffnung festzulegen und die Markierung mit zwei sich rechtwinklig schneidenden, geraden Linien ergänzt wird, deren Schnittpunkt in einem Zentrum der Düsenöffnung angeordnet ist, und das Verfahren den weiteren Schritt umfasst, in welchem der Laserstrahl auf eine Position auf den Bereich der Düse um den Eingang der Düsenöffnung herum fokussiert wird und mit dem Bildsensor eine weitere Abbildung des Bereichs der Düse um den Eingang der Düsenöffnung herum aufgenommen wird, so weist das Verfahren vorteilhafterweise die folgenden drei weiteren Schritte auf. Zuerst wird der Fokuspunkt des Laserstrahls auf einer ersten der sich rechtwinklig schneidenden Linien positioniert und die dafür verwendeten ersten Positionierungsparameter werden gespeichert. Danach wird der Fokuspunkt des Laserstrahls auf einer zweiten der sich rechtwinklig schneidenden Linien positioniert und die dafür verwendeten zweiten Positionierungsparameter werden gespeichert. Danach wird der Fokuspunkt des Laserstrahls basierend auf den gespeicherten ersten und zweiten Positionierungsparameter im Eingang der Düsenöffnung positioniert. Bei diesen drei Schritten kann jeweils durch die Aufnahme einer oder mehrerer weiteren Abbildungen mit dem Bildsensor die Positionierung des Fokuspunkts überprüft werden. Der Vorteil der drei Schritte ist, dass der Fokuspunkt des Laserstrahls auf einfache Art und Weise optimal im Eingang der Düsenöffnung positioniert werden kann, um den Laserstrahl in den Flüssigkeitsstrahl einzukoppeln.

Alternativ dazu besteht aber auch die Möglichkeit, dass das Verfahren keine solchen drei Schritte umfasst.

Falls die verwendete Laserbearbeitungsvorrichtung einen ersten Spiegel zum Umlenken des Laserstrahls und einen zweiten Spiegel zum Umlenken des Laserstrahls umfasst, wobei der erste Spiegel nur um eine erste Achse durch einen ersten Motor angetrieben schwenkbar ist und der zweite Spiegel nur um eine zweite Achse durch einen zweiten Motor angetrieben schwenkbar ist, so entspricht vorzugsweise eine der sich rechtwinklig schneidenden Linien der Bewegungsbahn, entlang welcher der Fokuspunkt des Laserstrahls durch Schwenken des ersten Spiegels um die erste Achse bewegbar ist, während die andere der sich rechtwinklig schneidenden Linien der Bewegungsbahn entspricht, entlang welcher der Fokuspunkt des Laserstrahls durch Schwenken des zweiten Spiegels um die zweite Achse bewegbar ist. In diesem Fall handelt es sich bei den ersten und zweiten Positionierungsparametern vorzugsweise um die Schwenkwinkel bzw. die Orientierung des ersten bzw. zweiten Spiegels um die erste bzw. zweite Achse. Alternativ dazu besteht aber auch die Möglichkeit, dass die sich schneidenden Linien nicht diesen Bewegungsbahnen entsprechen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung eines Querschnitts durch einen Bearbeitungskopf entlang einer Mittelachse des Bearbeitungkopfs,
- Fig. 2: eine schematische Explosionsdarstellung des Querschnitts durch den Bearbeitungskopf,
- Fig. 3: eine schematische Darstellung eines Querschnitts durch einen Düsenstein,
- Fig. 4: eine schematische Darstellung eines Querschnitts durch eine erfindungsgemässe Flüssigkeitsstrahl-Laserbearbeitungsmaschine mit dem Bearbeitungskopf, und
- Fig. 5a - f: schematische Darstellungen von mit einer CCD-Kamera aufgenommenen Abbildungen zur Illustration des erfindungsgemässen Verfahrens zum Fokussieren eines Laserstrahls in eine Düsenöffnung einer Düse der Flüssigkeitsstrahl-Laserbearbeitungsmaschine, um den Laserstrahl in einen von der Düsenöffnung erzeugten Flüssigkeitsstrahl einzukoppeln.

Grundsätzlich sind in den Figuren gleiche Teile mit gleichen Bezugszeichen versehen.

### Wege zur Ausführung der Erfindung

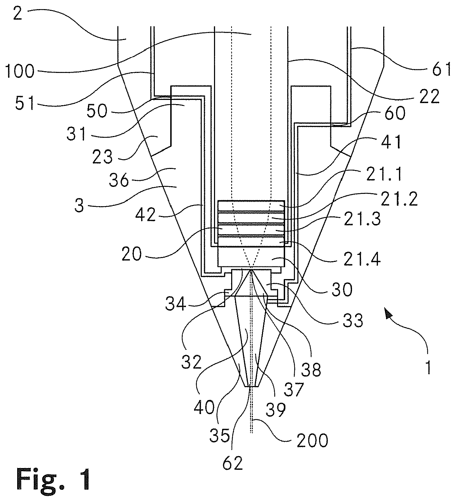

Figur 1 zeigt eine schematische Darstellung eines Querschnitts durch einen Bearbeitungskopf 1 entlang einer Mittelachse des Bearbeitungskopfs 1. Diese Mittelachse verläuft in der Figur 1 in der Darstellungsebene liegend von oben nach unten.

Der Bearbeitungskopf 1 gehört zu einer hier nicht weiter gezeigten Flüssigkeitsstrahl-Laserbearbeitungsmaschine. Diese Flüssigkeitsstrahl-Laserbearbeitungsmaschine umfasst einen Laser, welche einen Laserstrahl erzeugen kann, oder aber einen Eingang, durch welchen ein von einem separaten Laser erzeugter Laserstrahl in die Flüssigkeitsstrahl-Laserbearbeitungsmaschine geführt werden kann. In beiden Fällen ist der Laserstrahl 100 in der Flüssigkeitsstrahl-Laserbearbeitungsmaschine zum Bearbeitungskopf 1 geführt, um dort in einen Flüssigkeitsstrahl 200 eingekoppelt zu werden.

In der Querschnittsdarstellung der Figur 1 ist der Laserstrahl 100 gestrichelt dargestellt. Er verläuft von oben nach unten entlang der Mittelachse des Bearbeitungskopfs 1 in den Bearbeitungskopf 1 hinein und wird im Bearbeitungskopf 1 in den Flüssigkeitsstrahl 200 eingekoppelt, welcher an der Spitze des Bearbeitungskopfs 1 entlang der Mittelachse des Bearbeitungskopfs 1 aus dem Bearbeitungskopf 1 austritt. Daher verläuft in der Figur 1 auch die Strahlrichtung in der Darstellungsebene von oben nach unten.

Der Bearbeitungskopf 1 umfasst eine Optikeinheit 2 und eine Kopplungseinheit 3. Die Optikeinheit 2 weist ein vorderes Ende auf, welches sich in der gezeigten Darstellung im Vergleich zur restlichen Optikeinheit 2 unten befindet. Die Aussenhülle dieses vorderen Endes ist zylindermantelförmig, wobei die rotationssymmetrische Achse der Zylindermantelform entlang der Mittelachse des Bearbeitungskopfs 1 bzw. entlang der Mittelachse der Optikeinheit 2 verläuft. Innen im vorderen Ende der Optikeinheit 2 befindet sich ein Objektiv 20, welches vier Linsen 21.1, 21.2, 21.3, 21.4 umfasst. Die in Strahlrichtung gesehen letzte Linse 21.4 bildet einen Abschluss des vorderen Endes der Optikeinheit 2. Somit ist diese in Strahlrichtung gesehen letzte Linse 21.4 das in Strahlrichtung gesehen letzte optische Element der Optikeinheit 2.

Die Zylindermantelform des vorderen Endes der Optikeinheit 2 ist im Wesentlichen durch einen vorderen Bereich eines Strahlrohrs 22 gebildet, in welchem der Laserstrahl 100 von der restlichen Flüssigkeitsstrahl-Laserbearbeitungsmaschine her in den Bearbeitungskopf 1 geführt ist. Das Objektiv 20 ist am vorderen Ende dieses Strahlrohrs 22 angeordnet und dient dazu, den Laserstrahl 100 auf einen Fokuspunkt vor der Optikeinheit 2 zu fokussieren. Der Durchmesser dieses Fokuspunkts liegt im Bereich von 25µm bis 40µm.

Die Kopplungseinheit 3 umfasst einen Hauptkörper 36, ein transparentes Element 30, einen auswechselbaren Düsenstein 33 und eine auswechselbare Kopfspitzeneinheit 35. Im montierten Zustand des Bearbeitungskopfs 1 ist die Kopplungseinheit 3 wie in der Figur 1 gezeigt mit der Optikeinheit 2 verbunden. Dabei umschliesst sie mit ihrem Hauptkörper 36 das vordere Ende der Optikeinheit 2 mit dem Objektiv 20 und reicht entgegen der Strahlrichtung nach hinten bis hinter das Objektiv 20. Um dies zu ermöglichen, weist der Hauptkörper 36 einen auf einer Seite offenen Hohlraum mit einem kreisförmigen Querschnitt auf. Am Boden dieses Hohlraums befindet sich ein für das Laserlicht des Laserstrahls 100 transparentes Element 30, um den Laserstrahl 100, welcher die Optikeinheit 2 durch die in Strahlrichtung gesehen letzte Linse 21.4 des Objektivs 20 verlässt, in die Kopplungseinheit 3 einlassen zu können. Seitlich ist der Hohlraum durch eine rohrförmige Wandung 31 mit kreisförmigem Querschnitt abgeschlossen. Die dem Hohlraum abgewandte Aussenseite der Wandung 31 weist zwar ebenfalls einen kreisförmigen Querschnitt auf. Im Gegensatz zur Innenseite ist der Durchmesser des Querschnitts der Aussenseite aber nicht überall gleich gross. Einzig in einem Bereich eines Endes der Wandung 31, welcher im montierten Zustand des Bearbeitungskopfs 1 der Optikeinheit 2 gewandt ist, ist der Durchmesser des Querschnitts der Aussenseite konstant. Daher weist die Aussenseite des Endes der Wandung 31 in diesem Bereich eine Zylindermantelform auf. Vom der Optikeinheit 2 zugewandten Ende der Wandung 31 her gesehen nimmt der Durchmesser des Querschnitts der Aussenseite der Wandung 31 nach diesem zylindermantelförmigen Bereich zuerst zu, um sich anschliessend kegelförmig zu einer Spitze zu verjüngen.

Die Optikeinheit 2 weist am proximalen Ende ihres vorderen Endes eine ringförmige, das vordere Ende umlaufende Nut auf. Dabei bildet ein äusserer Rand dieser Nut eine Muffe 23. Wenn die Kopplungseinheit 3 mit der Optikeinheit 2 verbunden ist, so ist die offene Seite des Hohlraums im Hauptkörper 36 der Kopplungseinheit 3 entgegen der Strahlrichtung ausgerichtet und der Hauptkörper 36 ist über das vordere Ende der Optikeinheit 2 gestülpt, sodass sich das vordere Ende der Optikeinheit 2 im Hohlraum des Hauptkörpers 36 befindet. Der Bereich des Endes der Wandung 31 des Hauptkörpers 36, welcher im montierten Zustand des Bearbeitungskopfs 1 der Optikeinheit 2 zugewandt ist, befindet sich dabei in der Nut und ist von der Muffe 23 umgeben.

Die Muffe 23 der Optikeinheit 2 weist eine Aussenseite auf, welche sich in Strahlrichtung gesehen kegelförmig verjüngt. Am vorderen Ende der Muffe 23 geht diese Aussenseite in den sich kegelförmig verjüngenden Bereich der Aussenseite der Wandung 31 des Hauptkörpers 36 über. Dadurch bilden die Muffe 23 und der Hauptkörper 36 zusammen einen Kegel, welcher sich in Strahlrichtung verjüngt. Der zwischen einer rotationssymmetrischen Mittelachse des Kegels und der Aussenfläche des Kegels gemessenen Kegelöffnungswinkel dieses Kegels beträgt 23°. Dieser Kegelöffnungswinkel kann aber auch kleiner oder grösser sein. So kann er beispielsweise 20° oder kleiner sein. Je nach Ausführung kann er aber auch 30°, 45°, 60° oder grösser als 60° sein.

Wie bereits erwähnt, befindet sich am Boden des auf einer Seite offenen Hohlraums des Hauptkörpers 36 das für das Laserlicht des Laserstrahls 100 transparente Element 30. Dieses transparente Element 30 ist scheibenförmig und mit seinen beiden Hauptflächen senkrecht zur Mittelachse des Bearbeitungskopfs 1 bzw. zur Mittelachse der Kopplungseinheit 3 ausgerichtet. Eine der Hauptflächen des transparenten Elements 30 bildet einen Grossteil des Bodens des auf einer Seite offenen Hohlraums des Hauptkörpers 36. Die andere Hauptfläche des transparenten Elements 30 hingegen schliesst einen im Hauptkörper 36 angeordneten Flüssigkeitsraum 32 zum Hohlraum hin ab. Dieser Flüssigkeitsraum 32 ist ebenfalls scheibenförmig und mit seinen beiden Hauptflächen senkrecht zur Mittelachse der Kopplungseinheit 3 ausgerichtet. Ein auswechselbarer Düsenstein 33 schliesst den Flüssigkeitsraum 32 auf der dem transparenten Element 30 gegenüberliegenden Seite ab. Dieser auswechselbare Düsenstein 33 bildet die Düse zur Erzeugung des Flüssigkeitsstrahls 200. Er ist in seiner Grundform zylinderförmig und weist an seinen beiden auf seiner rotationssymmetrischen Achse gelegenen Enden flache Hauptflächen auf. Am einen dieser beiden Enden ist konzentrisch mit der Zylindergrundform ein Ring angeordnet, dessen senkrecht zur rotationssymmetrischen Achse gemessener Durchmesser grösser als der Durchmesser der restlichen Zylindergrundform ist. Wenn der Düsenstein 33 daher im Hauptkörper 36 der Kopplungseinheit 3 eingesetzt wird, so bildet dieser Ring einen Anschlag 34 und ermöglicht es, den Düsenstein 33 im Hauptkörper 36 richtig zu positionieren. Aufgrund dieses Anschlags 34 ist der Düsenstein 33 im Wesentlichen hutförmig.

In der dem Anschlag 34 gegenüberliegenden Hauptfläche des Düsensteins 33 weist der Düsenstein 33 eine Düsenöffnung 37 auf, welche einen Durchmesser von 70µm aufweist und welche entlang der rotationssymmetrischen Achse des Düsensteins 33 verläuft. Im montierten Zustand des Bearbeitungskopfs 1 ist diese Hauptfläche des Düsensteins 33 dem Flüssigkeitsraum 32 zugewandt und die rotationssymmetrische Achse des Düsensteins 33 verläuft entlang der Mittelachse des Bearbeitungskopfs 1 bzw. entlang der Mittelachse der Kopplungseinheit 3. Dadurch verläuft die Düsenöffnung 37 im montierten Zustand des Bearbeitungskopfs 1 entlang der Mittelachse des Bearbeitungskopfs 1. Dabei reicht die Düsenöffnung 37 jedoch nicht durch den ganzen Düsenstein 33 hindurch, sondern geht fliessend in Strahlrichtung gesehen in eine sich kegelförmig öffnende Öffnung 38 über, welche durch den Düsenstein 33 bis zur Hauptfläche des Düsensteins 33 reicht, die den Anschlag 34 aufweist. Dadurch ermöglicht der Düsenstein 33, durch die Düsenöffnung 37 mit der Flüssigkeit aus dem Flüssigkeitsraum 32 einen Flüssigkeitsstrahl 200 zu erzeugen, welcher entlang der Mittelachse des Bearbeitungskopfs 1 gerichtet und damit in Strahlrichtung den Düsenstein 33 durch die sich kegelförmig öffnende Öffnung 38 verlässt. Im vorliegenden Fall handelt es sich bei der dabei verwendeten Flüssigkeit um Wasser. Es kann aber auch eine andere Flüssigkeit als Wasser verwendet werden.

Wie bereits erwähnt, wird im Betrieb des Bearbeitungskopfs 1 der Laserstrahl 100 vom Objektiv 20 der Optikeinheit 2 auf einen Fokuspunkt vor der Optikeinheit 2 fokussiert. Dabei ist der Fokuspunkt derart positioniert, dass er im Anfangsbereich der Düsenöffnung 37 liegt. Dadurch wird der Laserstrahl 100 in den von der Düsenöffnung 37 erzeugten Flüssigkeitsstrahl 200 fokussiert und in den Flüssigkeitsstrahl 200 eingekoppelt, wo er aufgrund von Totalreflexion an der Oberfläche des Flüssigkeitsstrahls 200 eingekoppelt bleibt.

Um den Flüssigkeitsraum 40 und damit auch den Flüssigkeitsstrahl 200 mit Flüssigkeit zu versorgen, weist die Optikeinheit 2 einen mit einer hier nicht gezeigten Flüssigkeitsquelle verbundenen Flüssigkeitskanal 51 auf. Dieser Flüssigkeitskanal 51 führt zur Innenseite der Muffe 23 der Optikeinheit 2, wo er in einer Öffnung endet. Im montierten Zustand des Bearbeitungskopfs 1 liegt diese Öffnung des Flüssigkeitskanals 51 in der Optikeinheit 2 auf einer Öffnung im Ende der Kopplungseinheit 3, welches der Optikeinheit 2 zugewandt ist. Diese Öffnung in der Kopplungseinheit 3 bildet den Eingang zu einem weiteren Flüssigkeitskanal 42, welcher durch den Hauptkörper 36 der Kopplungseinheit 3 zum Flüssigkeitsraum 32 führt. Dadurch bilden die beiden aufeinanderliegenden Öffnungen in der Optikeinheit 2 und der Kopplungseinheit 3 eine Flüssigkeitsschnittstelle 50, über welche der Flüssigkeitsraum 32 von der Optikeinheit 2 mit Flüssigkeit versorgt werden kann. Entsprechend kann auch der Flüssigkeitsstrahl 200 über die Flüssigkeitsschnittstelle 50 mit Flüssigkeit versorgt werden.

Bei der Flüssigkeitsschnittstelle 50 wird durch die Öffnung in der Optikeinheit 2 Flüssigkeit ausgegeben, welche in die Öffnung in der Kopplungseinheit 3 geleitet wird. Dabei ist die Öffnung in der Optikeinheit 2 auf der Innenseite der Muffe 23 angeordnet, welche die Form einer Innenseite einer Zylindermantelfläche aufweist. Die rotationssymmetrische Achse dieser Zylindermantelfläche stimmt mit der Mittelachse der Optikeinheit 2 und damit mit der Mittelachse des Bearbeitungskopfs 1 überein. Damit ist diese Zylindermantelfläche im montierten Zustand des Bearbeitungskopfs 1 parallel zur Strahlrichtung ausgerichtet. Die Öffnung in der Kopplungseinheit 3 hingegen ist auf der Aussenseite des Endes der Kopplungseinheit 3 angeordnet, welches der Optikeinheit 2 zugewandt ist. Diese Aussenseite weist eine Form der Aussenseite einer Zylindermantelfläche auf, deren rotationssymmetrische Achse der Mittelachse der Kopplungseinheit 3 entspricht. Daher ist auch diese Zylindermantelfläche parallel zur Strahlrichtung ausgerichtet, wenn der Bearbeitungskopf 1 montiert ist.

Eine Flüssigkeitsschnittstellenfläche der Flüssigkeitsschnittstelle 50 ist durch die Bereiche der zylindermantelförmigen Flächen definiert, welche um die zur Flüssigkeitsschnittstelle 50 gehörende Öffnung in der Optikeinheit 2 und die zur Flüssigkeitsschnittstelle 50 gehörende Öffnung in der Kopplungseinheit 3 liegen. Dabei verläuft die Flüssigkeitsschnittstellenfläche ausgehend von den um die Öffnungen liegenden Bereichen der zylindermantelförmigen Flächen stetig über den Bereich der Öffnungen weiter. Daher liegt auch die Flüssigkeitsschnittstellenfläche auf einer Zylindermantelfläche, deren rotationssymmetrische Achse der Mittelachse der Kopplungseinheit 3 entspricht. Dabei ist die Flüssigkeitsschnittstellenfläche aber auf den Bereich der Öffnungen beschränkt, weil die Flüssigkeitsschnittstelle 50 auf diesen Bereich beschränkt ist. Dennoch ist die Flüssigkeitsschnittstellenfläche parallel zur Strahlrichtung ausgerichtet.

Da sich die Flüssigkeitsschnittstelle 50 im montierten Zustand des Bearbeitungskopfs 1 in Strahlrichtung gesehen auf einer Höhe der Muffe 23 der Optikeinheit 2 befindet, passiert der Laserstrahl 100 die Flüssigkeitsschnittstelle 50 bevor er das Objektiv 20 der Optikeinheit 2 passiert. Entsprechend befindet sich die Flüssigkeitsschnittstelle 50 in Strahlrichtung gesehen vor der in Strahlrichtung gesehen letzten Linse 21.4 des Objektivs 20.

Die Kopfspitzeneinheit 35 der Kopplungseinheit 3 weist eine im Wesentlichen konische Aussenform auf. Zudem weist sie in ihrem Innern eine Öffnung 39 auf, welche entlang ihrer Längsachse durchgehend durch die Kopfspitzeneinheit 35 ist und ebenfalls eine konische Form aufweist. Wenn der Bearbeitungskopf 1 zusammengesetzt ist, so ist die Kopfspitzeneinheit 35 am Hauptkörper 36 der Kopplungseinheit 3 montiert. Dabei verläuft sie mit ihrer Längsachse entlang der Mittelachse des Bearbeitungskopfs 1 und bildet mit ihrer konischen Aussenform die Spitze des durch die Muffe 23 und den Hauptkörper 36 gebildeten Kegels. In ihrem Innern ist dabei die konische Öffnung 39 derart ausgerichtet, dass sie sich in Richtung der Spitze der Aussenform verjüngt.

Im montierten Zustand des Bearbeitungskopfs 1 hält die Kopfspitzeneinheit 35 mit ihrem dem Hauptkörper 36 der Kopplungseinheit 3 zugewandten Ende den Düsenstein 33 an seiner Position im Hauptkörper 36 der Kopplungseinheit 3. Dabei befindet sich die dem Düsenstein 33 zugewandte Seite der Öffnung 39 in der Kopfspitzeneinheit 35 direkt auf der sich kegelförmig öffnenden Öffnung 38 im Düsenstein 33. Dadurch bilden die Öffnung 38 im Düsenstein 33 und die Öffnung 39 in der Kopfspitzeneinheit 35 einen Hohlraum im Bearbeitungskopf 1, welcher in einer Schnittebene entlang der Mittelachse des Bearbeitungskopfs 1 einen im Wesentlichen rhombusförmigen Querschnitt aufweist. Dieser Hohlraum bildet einen Gasstauraum 40. Im Betrieb des Bearbeitungskopfs 1 verläuft der von der Düsenöffnung 37 erzeugte Flüssigkeitsstrahl 200 durch diesen Gasstauraum 40 und verlässt den Bearbeitungskopf 1 durch die verjüngte Seite der konusförmigen Öffnung 39 in der Kopfspitzeneinheit 35. Dabei berührt der Flüssigkeitsstrahl 200 den Rand der verjüngten Seite der Öffnung 39 aber nicht, sondern lässt ringsum einen kleinen Spalt. Durch diesen Spalt kann Gas aus dem Gasstauraum 40 austreten, um einen den Flüssigkeitsstrahl 200 umhüllenden Gasstrahl zu bilden. Daher bildet die verjüngte Seite der konusförmigen Öffnung 39 in der Kopfspitzeneinheit 35 eine Gasaustrittsdüse 62. Der durch diese Gasaustrittsdüse 62 erzeugte, den Flüssigkeitsstrahl 200 umhüllende Gasstrahl dient dazu, den Flüssigkeitsstrahl 200 zu stabilisieren, so dass er über eine längere Distanz ab der Kopfspitzeneinheit 35 stabil ist und erst danach instabil wird und in einzelne Tropfen zerfällt. Dadurch wird ermöglicht, dass der Laserstrahl 100 über eine längere Distanz im Flüssigkeitsstrahl 200 eingekoppelt bleibt.

Um den Gasstauraum 40 mit Gas zu versorgen, weist die Optikeinheit 2 einen mit einer hier nicht gezeigten Gasquelle verbundenen Gaskanal 61 auf. Dieser Gaskanal 61 führt zur Innenseite der Muffe 23 der Optikeinheit 2, wo er in einer Öffnung endet. Im montierten Zustand des Bearbeitungskopfs 1 liegt diese Öffnung des Gaskanals 61 in der Optikeinheit 2 auf einer Öffnung im Ende der Kopplungseinheit 3, welches der Optikeinheit 2 zugewandt ist. Diese Öffnung in der Kopplungseinheit 3 bildet den Eingang zu einem weiteren Gaskanal 41, welcher durch den Hauptkörper 36 der Kopplungseinheit 3 und die Kopfspitzeneinheit 35 zur Öffnung 39 in der Kopfspitzeneinheit 35 führt. Dadurch bilden die beiden aufeinanderliegenden Öffnungen in der Optikeinheit 2 und der Kopplungseinheit 3 eine Gasschnittstelle 60, über welche der Gasstauraum 40 von der Optikeinheit 2 mit Gas versorgt werden kann. Entsprechend kann dadurch auch der Gasstrahl über die Gasschnittstelle 60 mit Gas versorgt werden.

Eine Gasschnittstellenfläche der Gasschnittstelle 60 ist durch die Bereiche der zylindermantelförmigen Flächen definiert, welche um die zur Gasschnittstelle 60 gehörende Öffnung in der Optikeinheit 2 und die zur Gasschnittstelle 60 gehörende Öffnung in der Kopplungseinheit 3 liegen. Dabei verläuft die Gasschnittstellenfläche von diesen umliegenden Bereichen der zylindermantelförmigen Flächen stetig über den Bereich der Öffnungen weiter. Daher liegt auch die Gasschnittstellenfläche auf einer Zylindermantelfläche, deren rotationssymmetrische Achse der Mittelachse der Kopplungseinheit 3 entspricht. Dabei ist die Gasschnittstellenfläche aber auf den Bereich der Öffnungen beschränkt, weil die Gasschnittstelle 60 auf diesen Bereich beschränkt ist. Dennoch ist die Gasschnittstellenfläche parallel zur Strahlrichtung ausgerichtet.

Da sich die Gasschnittstelle 60 im montierten Zustand des Bearbeitungskopfs 1 in Strahlrichtung gesehen auf einer Höhe der Muffe 23 der Optikeinheit 2 befindet, passiert der Laserstrahl 100 die Gasschnittstelle 60, bevor er das Objektiv 20 der Optikeinheit 2 passiert. Entsprechend befindet sich die Gasschnittstelle 60 wie die Flüssigkeitsschnittstelle 50 in Strahlrichtung gesehen vor der in Strahlrichtung gesehen letzten Linse 21.4 des Objektivs 20. Diese Anordnung der Gasschnittstelle 60 und der Flüssigkeitsschnittstelle 50 ermöglicht eine Konstruktion des Bearbeitungskopfs 1, bei welcher sich die Aussenform der Optikeinheit 2 und der Kopplungseinheit 3 in Strahlrichtung gesehen zuspitzt. Dies erlaubt es, den Bearbeitungskopf 1 relativ zu einem zu bearbeitenden Objekt zu neigen und dennoch mit dem stabilen Bereich des Flüssigkeitsstrahls 200 das Objekt zu erreichen, ohne dass der Bearbeitungskopf 1 mit dem Objekt zusammenstösst. Entsprechend wird durch diese Anordnung die dreidimensionale Bearbeitung von Objekten erleichtert. Zudem erlaubt die Anordnung des Objektivs 20 in Strahlrichtung gesehen nach der Flüssigkeitsschnittstelle 50 und der Gasschnittstelle 60 am vorderen Ende der Optikeinheit 2, dass die Fokussierung des Laserstrahls 100 erst kurz vor der Düsenöffnung 37 erfolgt. Dadurch kann das Objektiv eine kurze Brennweite aufweisen und den Laserstrahl dennoch auf den Fokuspunkt im Eingangsbereich der Düsenöffnung 37 fokussieren. Dies ermöglicht, dass der Laserstrahl 100 auf einen Fokuspunkt mit kleinem Durchmesser fokussiert werden kann. Entsprechend ermöglicht diese Konstruktion des Bearbeitungskopfs 1, dass der Laserstrahl 100 in einen Flüssigkeitsstrahl 200 mit kleinem Durchmesser eingekoppelt werden kann.

Auch wenn sich sowohl die Flüssigkeitsschnittstelle 50 als auch die Gasschnittstelle 60 in Strahlrichtung gesehen vor der letzten Linse 21.4 des Objektivs 20 befinden, ist die Gasschnittstelle 60 in Strahlrichtung gesehen nicht auf einer selben Höhe wie die Flüssigkeitsschnittstelle 50 angeordnet, sondern befindet sich in Strahlrichtung gesehen etwas nach der Flüssigkeitsschnittstelle 50. Dadurch wird ermöglicht, dass die Gasschnittstelle 60 und die Flüssigkeitsschnittstelle 50 mittels einer Dichtung voneinander getrennt werden können. Hierzu weist der zylindermantelförmige Bereich des Endes der Kopplungseinheit 3, welches im montierten Zustand des Bearbeitungskopfs 1 der Optikeinheit 2 zugewandt ist, drei konzentrisch umlaufende, in Figur 1 nicht gezeigte Dichtungsringe auf. Ein erster dieser Dichtungsringe verläuft in Strahlrichtung gesehen vor der Flüssigkeitsschnittstelle 50, während ein zweiter dieser Dichtungsringe zwischen der Flüssigkeitsschnittstelle 50 und der Gasschnittstelle 60 verläuft und während der dritte der Dichtungsringe in Strahlrichtung gesehen nach der Gasschnittstelle 60 angeordnet ist. Dadurch sind die Flüssigkeitsschnittstelle 50 und die Gasschnittstelle 60 voneinander getrennt, sodass keine Flüssigkeit von der Flüssigkeitsschnittstelle 50 zur Gasschnittstelle 60 und kein Gas von der Gasschnittstelle 60 zur Flüssigkeitsschnittstelle 50 gelangen kann. Ausserdem sind dadurch die Flüssigkeitsschnittstelle 50 und die Gasschnittstelle 60 auch nach aussen abgedichtet, sodass weder Flüssigkeit noch Gas zwischen der Optikeinheit 2 und der Kopplungseinheit 3 entweichen kann.

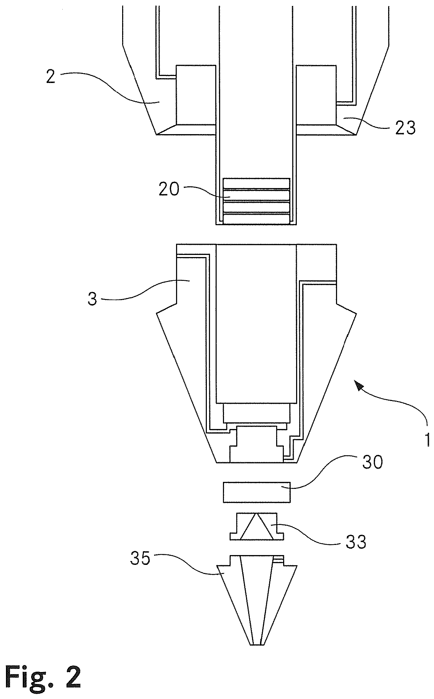

Figur 2 zeigt ähnlich wie bereits Figur 1 eine schematische Darstellung eines Querschnitts durch den Bearbeitungskopf 1 entlang einer Mittelachse des Bearbeitungskopfs 1. Im Unterschied zur Figur 1 ist aber in der Figur 2 eine Explosionsdarstellung gezeigt. Dadurch ist die Optikeinheit 2 mit der Muffe 23 und dem vorderen Ende mit dem Objektiv 20 als separates Element des Bearbeitungskopfs 1 zu erkennen. Ausserdem sind dadurch auch der Hauptkörper 36 der Kopplungseinheit 3 sowie das transparente Element 30, der Düsenstein 33 sowie die Kopfspitzeneinheit 35 als separate Elemente zu erkennen.

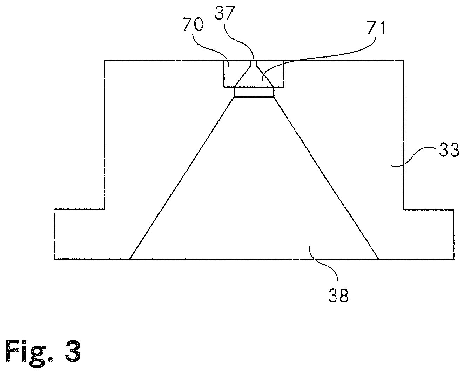

Figur 3 zeigt eine schematische Darstellung eines Querschnitts durch den Düsenstein 33. Durch die im Vergleich zu den Figuren 1 und 2 grössere Darstellung sind in der Figur 3 Details des Düsensteins 33 zu erkennen. So ist zu erkennen, dass sich die Düsenöffnung 37 in einer Einlage 70 befindet, welche in der entsprechenden Hauptfläche des Düsensteins 33 eingelassen ist. Diese Einlage 70 ist zylinderförmig. In einer ihrer beiden flachen Hauptflächen ist die Düsenöffnung 37 angeordnet, welche entlang der rotationssymmetrischen Achse der Einlage 70 in eine sich konisch öffnende Öffnung 71 in der Einlage 70 übergeht. Wenn die Einlage 70 wie hier dargestellt im restlichen Düsenstein 33 eingelassen ist, so geht die konische Öffnung 71 der Einlage 70 in die konische Öffnung 38 des Düsensteins 33 über.

Der erste Aspekt, d.h. der Bearbeitungskopf, ist nicht auf das in den Figuren 1 bis 3 gezeigte Beispiel beschränkt. Von diesem Beispiel sind diverse Abweichungen möglich. So kann beispielsweise die Aussenform des Bearbeitungskopfs anders als kegelförmig sein. Zudem können sowohl die Optikeinheit als auch die Kopplungseinheit anders geformt sein. Weiter können auch die Flüssigkeitsschnittstelle und die Gasschnittstelle woanders angeordnet und anders geformt sein. So können sie beispielsweise am äussersten Ende des der Optikeinheit zugewandten Endes der Kopplungseinheit angeordnet sein. Zudem können die die Schnittstellenfläche beispielsweise auch in einem Winkel zur Strahlrichtung ausgerichtet sein oder in einer senkrecht zur Strahlrichtung ausgerichteten Ebene liegen.

Weiter kann der Verlauf des Flüssigkeitskanals und des Gaskanals innerhalb der Optikeinheit und innerhalb der Kopplungseinheit andersartig verlaufen. So besteht beispielsweise die Möglichkeit, dass der Gaskanal nicht vom Hauptkörper der Kopplungseinheit via die Kopfspitzeneinheit, sondern via den Düsenstein oder direkt vom Hauptkörper der Kopplungseinheit zum Gasstauraum geführt ist. Auch besteht die Möglichkeit, dass die Kopplungseinheit keine auswechselbare Kopfspitzeneinheit aufweist. Unabhängig von diesen Varianten kann der Bearbeitungskopf auch ohne Gasstauraum auskommen. In diesem Fall kann der Gaskanal beispielsweise direkt mit der Gasaustrittsdüse verbunden sein. Es besteht aber auch die Möglichkeit, dass der Bearbeitungskopf gar keinen den Flüssigkeitsstrahl umhüllenden Gasstrahl erzeugen kann. In diesem Fall ist weder ein Gaskanal, eine Gasschnittstelle, ein Gasstauraum noch eine Gasaustrittsdüse erforderlich.

Weiter besteht die Möglichkeit, dass der Düsenstein anders konstruiert ist. Beispielsweise kann er anders geformt sein. Er kann aber auch einstückig und damit ohne Einlage gefertigt sein. Weiter besteht auch die Möglichkeit, dass die Düsenöffnung einen anderen Durchmesser als 70µm aufweist. So kann die Düsenöffnung beispielsweise einen Durchmesser im Bereich von 20µm bis 150µm aufweisen. Dieser Durchmesser kann aber auch 20µm oder kleiner, oder aber 150µm oder grösser sein. Genauso kann auch der Durchmesser des Fokuspunkts des Laserstrahls 100 vom Bereich von 25µm bis 40µm abweichen.

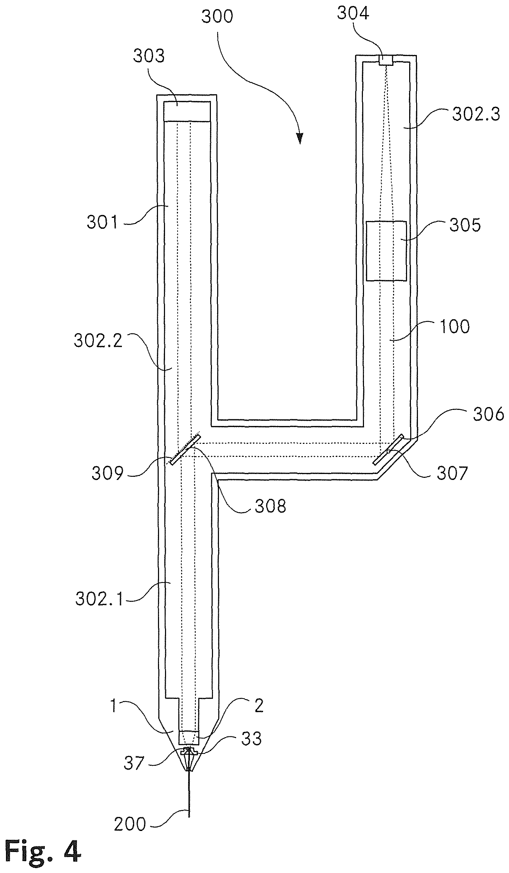

Figur 4 zeigt eine schematische Darstellung eines Querschnitts durch eine Flüssigkeitsstrahl-Laserbearbeitungsmaschine 300 gemäss der Erfindung. Der gezeigte Querschnitt verläuft entlang des Strahlengangs des Laserstrahls 100. Entsprechend verläuft der Strahlengang des Laserstrahls 100 im Wesentlichen in der Darstellungsebene. Dabei ist die Flüssigkeitsstrahl-Laserbearbeitungsmaschine 300 derart ausgerichtet dargestellt, dass oben und unten in der Darstellung oben und unten bei der Flüssigkeitsstrahl-Laserbearbeitungsmaschine 300 entsprechen.

Die Flüssigkeitsstrahl-Laserbearbeitungsmaschine 300 umfasst ein Strahlrohr 301, welches den Strahlengang des Laserstrahls 100 umschliesst. Dieses Strahlrohr 301 weist drei Arme 302.1, 302.2, 302.3 auf, welche durch eine Verzweigung miteinander verbunden sind. Das freie Ende des ersten Arms 302.1 des Strahlrohrs 301 wird durch einen Bearbeitungskopf 1 gemäss dem ersten Aspekt gebildet. Im vorliegenden Fall handelt es sich dabei um den anhand der Figuren 1 bis 3 detailliert beschriebenen Bearbeitungskopf 1. In der vorliegenden Figur 4 ist der Bearbeitungskopf 1 hingegen stark vereinfacht dargestellt, wobei auf eine korrekte Proportionierung der dargestellten Elemente verzichtet wurde. Das freie Ende des zweiten Arms 302.2 des Strahlrohrs 301 bildet einen Abschluss des Strahlengangs des Laserstrahls 100. Auf der Innenseite dieses Abschlusses ist als Bildsensor eine CCD-Kamera 303 angeordnet, welche für Licht mit der Wellenlänge des Laserstrahls 100 empfindlich ist. Das freie Ende des dritten Arms 302.3 des Strahlrohrs 301 ist zwar ebenfalls abgeschlossen, weist aber einen Eingang 304 auf. Durch diesen Eingang 304 wird der von einem von der Flüssigkeitsstrahl-Laserbearbeitungsmaschine 300 separaten Laser erzeugte Laserstrahl 100 der Flüssigkeitsstrahl-Laserbearbeitungsmaschine 300 mittels einer hier nicht gezeigten Glasfaser oder mittels eines hier nicht gezeigten Hohlleiters zugeführt. In einer Abwandlung von dieser Ausführung kann die Flüssigkeitsstrahl-Laserbearbeitungsmaschine 300 aber anstelle des Eingangs 304 auch einen eigenen Laser zur Erzeugung des Laserstrahls 100 umfassen.

Das freie Ende des dritten Arms 302.3 zeigt nach oben, sodass der Eingang 304 nach oben offen ist. Daher wird der Laserstrahl 100 von oben nach unten durch den Eingang 304 der Flüssigkeitsstrahl-Laserbearbeitungsmaschine 300 zugeführt. Die Strahlrichtung des Laserstrahls 100 verläuft daher innerhalb dieses freien Endes des dritten Arms 302.3 von oben nach unten. Hier durchläuft der Laserstrahl 100 eine Kollimationseinheit 305, welche den Laserstrahl 100 kollimiert. Um die Kollimation des Laserstrahls 100 zu ändern, kann die Kollimationseinheit 305 in Strahlrichtung oder entgegen der Strahlrichtung bewegt werden. Durch geeignete Positionierung der Kollimationseinheit 305 kann daher der Laserstrahl 100 nach der Kollimationseinheit 305 beispielsweise perfekt kollimiert sein, sodass die Lichtstrahlen des Laserstrahls 100 nach der Kollimationseinheit 305 exakt parallel zueinander verlaufen. Die Kollimationseinheit 305 kann aber auch anders positioniert werden, sodass der Laserstrahl 100 nach der Kollimationseinheit 305 nicht perfekt kollimiert ist, sondern dass die Lichtstrahlen des Laserstrahls 100 leicht konvergent oder leicht divergent zueinander verlaufen. Daher kann die Parallelität, Konvergenz oder Divergenz der Lichtstrahlen des Laserstrahls 100 nach der Kollimationseinheit 305 durch eine geeignete Positionierung der Kollimationseinheit 305 im Strahlrohr 301 nach Bedarf eingestellt werden.

In Strahlrichtung gesehen nach der Kollimationseinheit 305 weist der dritte Arm 302.3 des Strahlrohrs 301 einen rechtwinkligen Knick auf, nach welchem das Strahlrohr 301 in horizontaler Richtung verläuft. In diesem Knick ist ein erster Spiegel 306 angeordnet, welcher den Laserstrahl 100 reflektiert, sodass der Laserstrahl 100 nach dem ersten Spiegel 306 im horizontalen Bereich des Strahlenrohrs 301 weiterläuft. Der erste Spiegel 306 ist durch einen hier nicht gezeigten Motor angetrieben um eine erste Achse 307 schwenkbar. Diese erste Achse 307 ist horizontal ausgerichtet und zeigt vertikal aus der Darstellungsebene heraus. Daher ist die erste Achse 307 rechtwinklig zur Strahlrichtung des Laserstrahls 100 vor und nach dem ersten Spiegel 306 ausgerichtet. Durch Einstellen der Orientierung des ersten Spiegels 306 um die erste Achse 307 kann daher die Strahlrichtung des Laserstrahls 100 nach dem ersten Spiegel 306 genau horizontal ausgerichtet oder leicht nach oben oder leicht nach unten geneigt werden.

Der horizontal verlaufende Bereich des dritten Arms 302.3 des Strahlrohrs 301 verläuft ausgehend vom Knick im dritten Arm 302.3 zur Verzweigung des Strahlrohrs 301. Ausgehend von der Verzeigung verläuft der erste Arm 302.1 des Strahlrohrs 301 vertikal nach unten und der zweite Arm 302.2 des Strahlrohrs 301 vertikal nach oben. In der Verzweigung ist ein zweiter Spiegel 308 angeordnet, welcher den Laserstrahl 100 reflektiert, sodass der Laserstrahl 100 nach dem zweiten Spiegel 308 im ersten Arm 302.1 des Strahlenrohrs 301 nach unten weiterläuft. Der zweite Spiegel 308 ist durch einen hier nicht gezeigten Motor angetrieben um eine zweite Achse 309 schwenkbar. Diese zweite Achse 309 liegt in der Darstellungsebene und ist damit rechtwinklig zur ersten Achse 307 ausgerichtet. Sie zeigt in einem 45° Winkel von schräg unten nach schräg oben ungefähr in Richtung des freien Endes des dritten Arms 302.3 des Strahlrohrs 301. Durch Einstellen der Orientierung des zweiten Spiegels 308 um die zweite Achse 309 kann die Strahlrichtung des Laserstrahls 100 nach dem zweiten Spiegel 308 eingestellt werden. Dies ermöglicht es, die Strahlrichtung des Laserstrahls 100 nach dem zweiten Spiegel 308 je nach Bedarf genau in der Darstellungsebene zu halten oder leicht aus der Darstellungsebene zum Betrachter hin oder vom Betrachter weg zu neigen.

Im freien Ende des vertikal nach unten verlaufenden ersten Arms 302.1 des Strahlrohrs 301 wird der Laserstrahl 100 im Bearbeitungskopf 1 durch die Optikeinheit 2 auf einen Fokuspunkt fokussiert. Durch Einstellen der Orientierung des zweiten Spiegels 308 um die zweite Achse 309 kann daher eine Position des Fokuspunkts des Laserstrahls 100 in einer Richtung senkrecht zur Darstellungsebene eingestellt werden. Zudem kann durch Einstellen der Orientierung des ersten Spiegels 306 um die erste Achse 307 eine Position des Fokuspunkts in einer Richtung senkrecht zur Ausrichtung des ersten Arms 302.1 des Strahlrohrs 301, welche parallel zur Darstellungsebene verläuft, eingestellt werden. Somit ermöglichen die beiden Spiegel 306, 308 eine Positionierung des Laserstrahls 100 im Bearbeitungskopf 1 in einer Ebene senkrecht zur Ausrichtung des ersten Arms 302.1.

Da die Optikeinheit gemäß der Erfindung keine beweglichen Elemente umfasst, hängt ein Abstand des Fokuspunkts des Laserstrahls 100 zur Optikeinheit 2 von der Kollimation des Laserstrahls 100 unmittelbar vor der Optikeinheit 2 ab. Daher ermöglicht die Positionierung der Kollimationseinheit 305 im dritten Arm 302.3 nicht nur eine Einstellung der Kollimation des Laserstrahls 100 nach der Kollimationseinheit 305, sondern auch eine Einstellung des Abstands des Fokuspunkts des Laserstrahls 100 zur Optikeinheit 2.

Falls der Fokuspunkt des Laserstrahls 100 in Strahlrichtung gesehen deutlich vor oder hinter der Wand des auswechselbaren Düsensteins 33 bzw. der Düse, welche der Optikeinheit 2 zugewandt ist, positioniert wird, so ist der Laserstrahl 100 auf den Eingang der Düsenöffnung 37 defokussiert, sodass Laserlicht des Laserstrahls 100 vom Bereich der Düse um den Eingang der Düsenöffnung 37 herum reflektiert wird. Dieses reflektierte Licht wird durch die Optikeinheit 2 in den ersten Arm 302.2 des Strahlrohrs 301 zurückgeleitet, wo es auf den zweiten Spiegel 308 trifft, welcher das reflektierte Licht zumindest teilweise transmittiert. Daher gelangen zumindest Teile des reflektierten Lichts in den zweiten Arm 302.2 des Strahlrohrs 301, an dessen freiem Ende sie auf die CCD-Kamera 303 treffen. Um dies zu ermöglichen, kann der zweite Spiegel 308 beispielsweise halbtransparent sein. Der zweite Spiegel 308 kann aber beispielsweise auch Licht der einen Polarisationsrichtung reflektieren und Licht der anderen Polarisationsrichtung transmittieren. In diesem Fall kann das Laserlicht des Laserstrahls 100 beispielsweise bereits polarisiert durch den Eingang 304 der Flüssigkeitsstrahl-Laserbearbeitungsmaschine 300 zugeführt werden oder aber im dritten Arm 302.1 des Strahlrohrs 301 polarisiert werden. Wenn dabei die Polarisation des Laserlichts geeignet gewählt wird, wird der Laserstrahl 100 vom zweiten Spiegel 308 zum Bearbeitungskopf 1 reflektiert. Wenn zudem im ersten Arm 302.1 des Strahlrohrs 301 eine (hier nicht gezeigte) Lambda-viertel-Platte eingebaut ist, durchläuft das Licht des Laserstrahls 100, welches vom zweiten Spiegel 308 in den ersten Arm 302.1 des Strahlrohrs 301 reflektiert sowie vom Bereich der Düse um den Eingang der Düsenöffnung 37 herum wieder zurück zum zweiten Spiegel 308 reflektiert wird, diese Lambda-viertel-Platte zwei mal. Dadurch wird dieses reflektierte Licht im ersten Arm 302.1 umpolarisiert. Dies führt dazu, dass es nun durch den zweiten Spiegel 308 transmittiert wird und die CCD-Kamera 303 erreichen kann. Wenn daher bei auf den Eingang der Düsenöffnung 37 defokussiertem Laser mit der CCD-Kamera 303 eine Abbildung aufgenommen wird, so ist in dieser Abbildung der Eingang der Düsenöffnung 37 als unbeleuchteter Fleck zu erkennen. Damit in dieser Abbildung die Kontur des Eingangs der Düsenöffnung 37 klar zu erkennen ist, kann die CCD-Kamera 303 zudem ein geeignetes Objektiv aufweisen, welches beweglich sein kann.

Falls der Fokuspunkt des Laserstrahls 100 hingegen in Strahlrichtung gesehen auf eine durch die Wand des auswechselbaren Düsensteins 33 bzw. der Düse, welche der Optikeinheit 2 zugewandt ist, definierte Ebene positioniert ist und in dieser Ebene im Eingang der Düsenöffnung 37 positioniert ist, so wird der Laserstrahl 100 in den durch die Düse erzeugten Flüssigkeitsstrahl 200 eingekoppelt. Im vorliegenden Ausführungsbeispiel handelt es sich beim Flüssigkeitsstrahl 200 um einen Wasserstrahl. Es besteht aber auch die Möglichkeit, eine beliebige andere Flüssigkeit als Wasser zur Erzeugung des Flüssigkeitsstrahls 200 zu verwenden.

Das erfindungsgemässe Verfahren, mit welchem der Fokuspunkt des Laserstrahls 100 derart positioniert werden kann, ist nachfolgend erläutert.

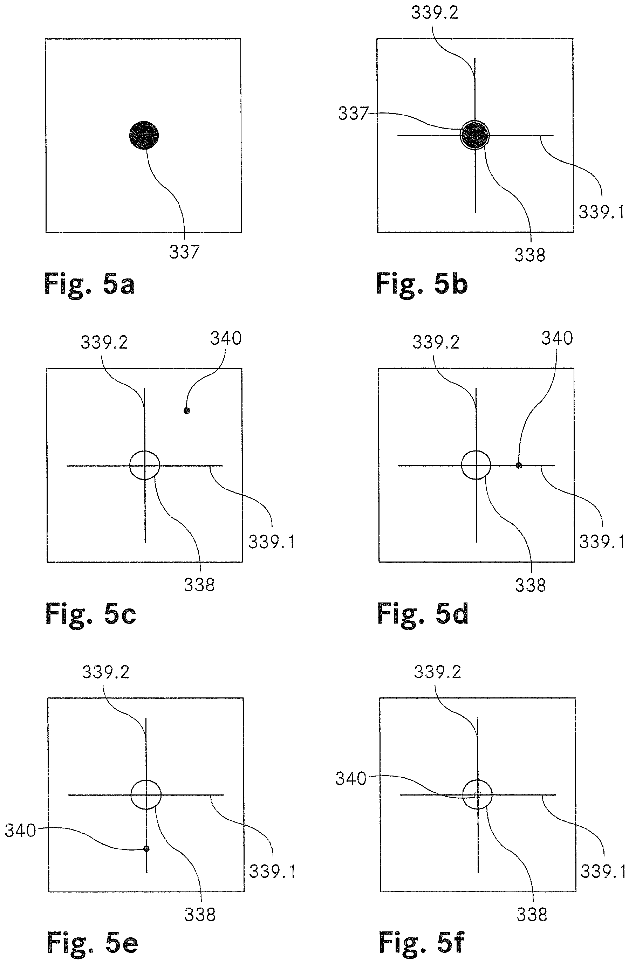

Die Figuren 5a bis 5f illustrieren eine Ausführungsform des Verfahrens gemäss der Erfindung zum Fokussieren des Laserstrahls 100 in die Düsenöffnung 37 der Düse der Flüssigkeitsstrahl-Laserbearbeitungsmaschine 300, um den Laserstrahl 100 in den von der Düsenöffnung 37 erzeugten Flüssigkeitsstrahl 200 einzukoppeln.

In diesem Verfahren wird in einem ersten Schritt der Laserstrahl 100 auf den Eingang der Düsenöffnung 37 defokussiert, indem die Kollimationseinheit 305 derart im dritten Arm 302.3 des Strahlrohrs 301 positioniert wird, dass sich der Fokuspunkt in Strahlrichtung gesehen hinter der Düse befindet. Während die Düse durch den defokussierten Laserstrahl 100 beleuchtet wird, wird mit der CCD-Kamera 303 eine Aufnahme des Bereichs der Düse um den Eingang der Düsenöffnung 37 herum aufgenommen. Figur 5a zeigt eine schematische Darstellung einer solchen Aufnahme, in welcher der Eingang der Düsenöffnung 37 als unbeleuchteter, dunkler Fleck 337 zu erkennen ist.

In einem zweiten Schritt wird die Kontur dieses Flecks 337 in der Abbildung mit einer Markierung 338 markiert. Wie in der Figur 5b dargestellt, wird diese Markierung 338 durch zwei gerade, sich rechtwinklig im Zentrum des Flecks 337 schneidende Linien 339.1, 339.2 ergänzt. Dabei wird die Markierung in einem Zwischenspeicher gespeichert, sodass sie in andere Abbildungen der CCD-Kamera 303 übertragen werden kann.

In einem dritten Schritt wird der Laserstrahl 100 bei reduzierter Leistung des Lasers auf eine Position auf dem Bereich der Düse um den Eingang der Düsenöffnung 37 herum fokussiert, indem die Kollimationseinheit 305 im dritten Arm 302.3 des Strahlrohrs 301 entsprechend positioniert wird. Dabei wird in einem schrittweisen Vorgehen die Fokussierung des Laserstrahls 100 jeweils durch eine Aufnahme mit der CCD-Kamera 303 überprüft, bis der Fokuspunkt 340 des Laserstrahls 100 in der Abbildung eine minimale Grösse aufweist. Eine derartige Abbildung mit optimal fokussiertem Laserstrahl 100 ist in der Figur 5c schematisch dargestellt, wobei die in den ersten beiden Schritten des Verfahrens erstellte Markierung 338 auf die Abbildung übertragen ist. Aus Darstellungsgründen ist dabei der hell beleuchtete Fokuspunkt 340 als dunkler Punkt dargestellt.

Nach diesem dritten Schritt wird in einem vierten Schritt der Fokuspunkt 340 des Laserstrahls 100 auf der ersten der beiden sich schneidenden Linien 339.1 der Markierung 338 positioniert. Da eine Bewegung des Fokuspunkts 340 entlang der zweiten der beiden sich schneidenden Linien 339.2 durch eine Schwenkbewegung des zweiten Spiegels 308 um die zweite Achse 309 erreicht wird, genügt hierzu die Einstellung einer geeigneten Orientierung des zweiten Spiegels 308. In diesem vierten Schritt kann iterativ vorgegangen werden, indem jeweils durch die Aufnahme einer Abbildung mit der CCD-Kamera 303 und Übertragung der Markierung 338 in diese Abbildung überprüft wird, ob der Fokuspunkt 304 des Laserstrahls 100 wirklich auf der ersten Linie 339.1 der Markierung 338 positioniert ist. Danach wird die Orientierung des zweiten Spiegels 308 um die zweite Achse 309 als erster Positionierungsparameter gespeichert.

In einem fünften Schritt wird der Fokuspunkt 340 des Laserstrahls 100 auf der zweiten der beiden sich schneidenden Linien 339.2 der Markierung 338 positioniert. Da eine Bewegung des Fokuspunkts 340 entlang der ersten der beiden sich schneidenden Linien 339.1 durch eine Schwenkbewegung des ersten Spiegels 306 um die erste Achse 307 erreicht wird, genügt hierzu die Einstellung einer geeigneten Orientierung des ersten Spiegels 306. Um dabei mittels Aufnahmen von Abbildungen mit der CCD-Kamera 303 und Übertragung der Markierung 338 in diese Abbildungen überprüfen zu können, ob der Fokuspunkt 340 korrekt auf der zweiten Linie 339.2 positioniert ist, wird zu Beginn des fünften Schritts der zweite Spiegel 308 etwas um die zweite Achse 309 geschwenkt, sodass der Fokuspunkt 340 des Laserstrahls 100 bei einer Bewegung des ersten Spiegels 306 um die erste Achse 307 immer neben dem Eingang der Düsenöffnung 37 durchbewegt wird. Sobald der Fokuspunkt 340 wie in der Figur 5e dargestellt auf der zweiten Linie 339.2 der Markierung 338 positioniert ist, wird die Orientierung des ersten Spiegels 306 um die ersten Achse 307 als zweiter Positionierungsparameter gespeichert.

In einem sechsten Schritt des Verfahrens wird der zweite Spiegel 308 gemäss dem ersten Positionsparameter um die zweite Achse 309 orientiert und der erste Spiegel 306 gemäss dem zweiten Positionsparameter um die erste Achse 307 orientiert. Dadurch wird der Fokuspunkt 340 des Laserstrahls 100 im Eingang der Düsenöffnung 37 positioniert und der Laserstrahl 100 in den von der Düsenöffnung 37 erzeugten Flüssigkeitsstrahl 200 eingekoppelt. Da bei einer derartigen Positionierung des Fokuspunkts 340 des Laserstrahls 100 kein Licht des Laserstrahls 100 vom Bereich der Düse um den Eingang der Düsenöffnung herum zur CCD-Kamera 303 reflektiert wird, ist der Fokuspunkt 304 in einer von der CCD-Kamera 303 aufgenommenen Abbildung nicht zu erkennen. Entsprechend ist in der Figur 5f der Fokuspunkt 340 des Laserstrahls 100 nur als gestrichelte Linie im Zentrum der Markierung 338 gezeigt.

Um die Durchführung dieses Verfahrens zu ermöglichen, kann die Flüssigkeitsstrahl-Laserbearbeitungsmaschine 300 einen Speicher zum Speichern der ersten und zweiten Positionierungsparameter sowie einen Zwischenspeicher zum Speichern der Markierung umfassen. Zudem kann die Flüssigkeitsstrahl-Laserbearbeitungsmaschine 300 eine Steuereinheit zum Steuern der Positionierung der Kollimationseinheit 305 im dritten Arm 302.3 des Strahlrohrs 301 sowie zum Steuern der Orientierung des ersten und des zweiten Spiegels 306, 308 um die erste bzw. zweite Achse 307, 309 umfassen. Es besteht aber auch die Möglichkeit, dass der Speicher, der Zwischenspeicher oder die Steuereinheit separat von der Flüssigkeitsstrahl-Laserbearbeitungsmaschine 300 ausgebildet sind. So können der Speicher, der Zwischenspeicher und die Steuereinheit beispielsweise durch einen Computer gebildet sein, an welchem die Flüssigkeitsstrahl-Laserbearbeitungsmaschine angeschlossen ist.

Die Erfindung ist nicht auf die Flüssigkeitsstrahl-Laserbearbeitungsmaschine 300 und das anhand der Figuren 5a - 5f im Detail beschriebene Verfahren beschränkt. So kann die Flüssigkeitsstrahl-Laserbearbeitungsmaschine 300 beispielsweise einen anderen Bearbeitungskopf aufweisen. Auch können das Strahlrohr sowie die Arme des Strahlrohrs anders ausgebildet sein. Beispielsweise kann das Strahlrohr keine Verzweigung aufweisen, sodass es auch keine Arme aufweist, die von einer Verzweigung ausgehen. Zudem können auch die beiden Spiegel anders angeordnet, anders ausgerichtet und um anders ausgerichtete Achsen schwenkbar sein.

Weiter besteht die Möglichkeit, dass die Flüssigkeitsstrahl-Laserbearbeitungsmaschine keine CCD-Kamera, sondern einen andersartigen zweidimensionalen Bildsensor aufweist. Auch ist nicht erforderlich, dass die gesamte Kollimationseinheit in Strahlrichtung oder entgegen der Strahlrichtung bewegbar ist. So weist gemäss der Erfindung die Kollimationseinheit beispielsweise auch nur einzelne bewegliche Elemente auf. Je nach Ausführungsform kann die Optikeinheit dem Bearbeitungskopf zugeordnet sein, oder aber vom Bearbeitungskopf separat ausgeführt sein.

Weiter ist das Verfahren zum Fokussieren des Laserstrahls in die Düsenöffnung der Düse der Flüssigkeitsstrahl-Laserbearbeitungsmaschine, um den Laserstrahl in den von der Düsenöffnung erzeugten Flüssigkeitsstrahl einzukoppeln, nicht auf das im Detail beschriebene Verfahren beschränkt. So kann das Verfahren beispielsweise zusätzliche Schritte umfassen. Zudem können einzelne der beschriebenen Schritte abgeändert oder weggelassen werden. Zum Beispiel kann darauf verzichtet werden, die Markierung mit den beiden sich schneidenden Linien zu ergänzen. Dieser Schritt kann ersatzlos gestrichen werden oder durch einen Schritt ersetzt werden, in welchem der Markierung andere Linien angefügt werden.

Zusammenfassend ist festzustellen, dass eine Flüssigkeitsstrahl-Laserbearbeitungsmaschine geschaffen wird, welche das Einkoppeln des Laserstrahls in den Flüssigkeitsstrahl vereinfacht. Ausserdem wird ein Verfahren zum Fokussieren eines Laserstrahls in eine Düsenöffnung einer Düse in einer derartigen Flüssigkeitsstrahl-Laserbearbeitungsmaschine geschaffen, welche das Einkoppeln des Laserstrahls in den Flüssigkeitsstrahl vereinfacht.

## Patentansprüche

1. Flüssigkeitsstrahl-Laserbearbeitungsmaschine (300) mit einem Bearbeitungskopf (1) zum Einkoppeln eines Laserstrahls (100) in einen Flüssigkeitsstrahl (200), wobei der Bearbeitungskopf (1) eine Düse (33) mit einer Düsenöffnung (37) zur Erzeugung des Flüssigkeitsstrahls (200) aufweist, und der Laserstrahl (100) durch eine Fokussiereinrichtung (2, 305) in einen Eingang der Düsenöffnung (37) fokussierbar ist, um den Laserstrahl (100) in den Flüssigkeitsstrahl (200) einzukoppeln, und wobei die Flüssigkeitsstrahl-Laserbearbeitungsmaschine (300) einen zweidimensionalen Bildsensor (303) zum Abbilden eines Bereichs der Düse (33) um den Eingang der Düsenöffnung (37) herum umfasst, **dadurch gekennzeichnet, dass** der Laserstrahl (100) auf einen Eingang der Düsenöffnung (37) defokussierbar ist, sodass Laserlicht des Laserstrahls (100) vom Bereich der Düse (33) um den Eingang der Düsenöffnung (37) herum zum Bildsensor (303) reflektiert wird, damit mit dem Bildsensor (303) eine Abbildung des Bereichs der Düse (33) um den Eingang der Düsenöffnung (37) herum aufnehmbar ist, in welcher der Eingang der Düsenöffnung (37) erkennbar ist, wobei die Fokussiereinrichtung (2, 305) eine Kollimationseinheit (305) zur Kollimation des Laserstrahls (100) zu einem parallelen oder annähernd parallelen Strahl und eine unbewegliche, statische Optikeinheit (2) zum Fokussieren des parallelen oder annähernd parallelen Strahls auf einen Fokuspunkt (340) umfasst und die gesamte Kollimationseinheit (305) oder einzelne optische Elemente der Kollimationseinheit (305) bewegbar sind, um die Kollimation des Laserstrahls (100) zu ändern und dadurch eine Distanz des Fokuspunkts (340) des Laserstrahls (100) zur Optikeinheit (2) zu ändern.

2. Flüssigkeitsstrahl-Laserbearbeitungsmaschine (300) nach Anspruch 1, **gekennzeichnet durch** einen ersten Spiegel (306) zum Umlenken des Laserstrahls (100) und einen zweiten Spiegel (308) zum Umlenken des Laserstrahls (100), wobei der erste Spiegel (306) nur um eine erste Achse (307) durch einen ersten Motor angetrieben schwenkbar ist und der zweite Spiegel (308) nur um eine zweite Achse (309) durch einen zweiten Motor angetrieben schwenkbar ist, wobei die erste Achse (307) derart zur zweiten Achse (309) ausgerichtet ist, dass durch eine Schwenkbewegung des ersten Spiegels (306) um die erste Achse (307) der Laserstrahl (100) entlang einer ersten Geraden über den Bereich der Düse (33) um den Eingang der Düsenöffnung (37) herum bewegbar ist, während durch eine Schwenkbewegung des zweiten Spiegels (308) um die zweite Achse (309) der Laserstrahl (100) entlang einer zweiten Geraden über den Bereich der Düse (33) um den Eingang der Düsenöffnung (37) herum bewegbar ist, wobei die erste und die zweite Geraden in einem Winkel zueinander angeordnet sind und sich daher schneiden.

3. Flüssigkeitsstrahl-Laserbearbeitungsmaschine (300) nach einem der Ansprüche 1 bis 2, **dadurch gekennzeichnet, dass** der Bildsensor eine CCD-Kamera (303) umfasst, welche ihrerseits ein geeignetes bewegliches Objektiv aufweist, damit in der Abbildung eine Kontur des Eingangs der Düsenöffnung (37) klar erkennbar gemacht werden kann.

4. Flüssigkeitsstrahl-Laserbearbeitungsmaschine nach Anspruch 1, **dadurch gekennzeichnet, dass** der Bearbeitungskopf (1) zum Einkoppeln eines Laserstrahls (100) in einen Flüssigkeitsstrahl (200), folgendes umfasst
a) eine Optikeinheit (2) mit wenigstens einem optischen Element (20, 21.1, ... 21.4) zum Fokussieren des Laserstrahls (100) und
b) eine Kopplungseinheit (3) mit einem durch eine Wand begrenzten Flüssigkeitsraum (32), wobei in der Wand eine Düse (33) mit einer Düsenöffnung (37) zur Erzeugung eines Flüssigkeitsstrahls (200) angeordnet ist,
wobei in einem mit der Optikeinheit (2) verbundenen Zustand der Kopplungseinheit (3) der durch die Optikeinheit (2) fokussierbare Laserstrahl (100) in eine Strahlrichtung durch den Flüssigkeitsraum (32) der Kopplungseinheit (3) hindurch in die Düsenöffnung (37) richtbar ist und in den von der Düse (33) erzeugbaren, in Strahlrichtung laufenden Flüssigkeitsstrahl (200) einkoppelbar ist, wobei zur Versorgung des Flüssigkeitsraums (32) mit Flüssigkeit aus der Optikeinheit (2) zwischen der Optikeinheit (2) und der Kopplungseinheit (3) eine Flüssigkeitsschnittstelle (50) gebildet ist, **dadurch gekennzeichnet, dass** im mit der Optikeinheit (2) verbundenen Zustand der Kopplungseinheit (3) die Flüssigkeitsschnittstelle (50) in Strahlrichtung gesehen vor dem in Strahlrichtung gesehen letzten optischen Element (20, 21.4) der Optikeinheit (2) angeordnet ist.

5. Flüssigkeitsstrahl-Laserbearbeitungsmaschine nach Anspruch 4, **dadurch gekennzeichnet, dass** im mit der Optikeinheit (2) verbundenen Zustand der Kopplungseinheit (3) die Flüssigkeitsschnittstelle (50) eine Flüssigkeitsschnittstellenfläche aufweist, welche in einem Winkel zu einer senkrecht zur Strahlrichtung ausgerichteten Ebene ausgerichtet ist.

6. Flüssigkeitsstrahl-Laserbearbeitungsmaschine nach Anspruch 5, **dadurch gekennzeichnet, dass** die Flüssigkeitsschnittstellenfläche parallel zur Strahlrichtung verläuft.

7. Flüssigkeitsstrahl-Laserbearbeitungsmaschine nach einem der Ansprüche 4 bis 6, **dadurch gekennzeichnet, dass** sich die Kopplungseinheit (3) in eine Richtung verjüngt, wobei diese Richtung im mit der Optikeinheit (2) verbundenen Zustand der Kopplungseinheit (3) der Strahlrichtung entspricht.

8. Flüssigkeitsstrahl-Laserbearbeitungsmaschine nach Anspruch 7, **dadurch gekennzeichnet, dass** die Verjüngung kegelmantelförmig ist.

9. Flüssigkeitsstrahl-Laserbearbeitungsmaschine nach Anspruch 8, **dadurch gekennzeichnet, dass** die kegelmantelförmige Verjüngung einen zwischen einer rotationssymmetrischen Mittelachse der Kegelmantelform und der Aussenfläche der Kegelmantelform gemessenen Kegelöffnungswinkel von höchstens 60°, höchstens 45°, höchstens 30°, insbesondere von höchstens 20° aufweist.

10. Flüssigkeitsstrahl-Laserbearbeitungsmaschine nach einem der Ansprüche 4 bis 9, **dadurch gekennzeichnet, dass** die Kopplungseinheit (3) eine Gasaustrittsdüse (62) aufweist, um einen den Flüssigkeitsstrahl (200) umhüllenden Gasstrahl zu formen.

11. Flüssigkeitsstrahl-Laserbearbeitungsmaschine nach Anspruch 10, **dadurch gekennzeichnet, dass** die Kopplungseinheit (3) einen Gasstauraum (40) aufweist, welcher im mit der Optikeinheit (2) verbundenen Zustand der Kopplungseinheit (3) in Strahlrichtung gesehen nach der Düsenöffnung (37) angeordnet ist.

12. Flüssigkeitsstrahl-Laserbearbeitungsmaschine nach Anspruch 10 oder 11, **dadurch gekennzeichnet, dass** im mit der Optikeinheit (2) verbundenen Zustand der Kopplungseinheit (3) zur Versorgung der Kopplungseinheit (3) mit Gas für den Gasstrahl zwischen der Optikeinheit (2) und der Kopplungseinheit (3) eine Gasschnittstelle (60) gebildet ist, welche in Strahlrichtung gesehen vor dem in Strahlrichtung gesehen letzten optischen Element (20, 21.4) der Optikeinheit (2) angeordnet ist.

13. Flüssigkeitsstrahl-Laserbearbeitungsmaschine nach Anspruch 12, **dadurch gekennzeichnet, dass** im mit der Optikeinheit (2) verbundenen Zustand der Kopplungseinheit (3) die Gasschnittstelle (60) eine Gasschnittstellenfläche aufweist, welche in einem Winkel zu einer senkrecht zur Strahlrichtung ausgerichteten Ebene ausgerichtet ist.

14. Flüssigkeitsstrahl-Laserbearbeitungsmaschine nach Anspruch 13, **dadurch gekennzeichnet, dass** die Gasschnittstellenfläche im mit der Optikeinheit (2) verbundenen Zustand der Kopplungseinheit (3) parallel zur Strahlrichtung verläuft.

15. Flüssigkeitsstrahl-Laserbearbeitungsmaschine nach einem der Ansprüche 4 bis 14, **dadurch gekennzeichnet, dass** die Kopplungseinheit (3) einen Hohlraum aufweist, welcher auf eine Seite offen ist und in welchen die Optikeinheit (2) im mit der Optikeinheit (2) verbundenen Zustand der Kopplungseinheit (3) hineinragt.

16. Flüssigkeitsstrahl-Laserbearbeitungsmaschine nach einem der Ansprüche 4 bis 15, **dadurch gekennzeichnet, dass** die Optikeinheit (2) eine Muffe (23) bildet und die Kopplungseinheit (3) an der Flüssigkeitsschnittstelle (50) umschliesst.

17. Verfahren zum Fokussieren eines Laserstrahls (100) in eine Düsenöffnung (37) einer Düse (33) in einer Flüssigkeitsstrahl-Laserbearbeitungsmaschine (300) nach einem der Ansprüche 1 bis 2, um den Laserstrahl (100) in einen von der Düsenöffnung (37) erzeugten Flüssigkeitsstrahl (200) einzukoppeln, mit einem ersten Schritt, in welchem der Laserstrahl (100) auf einen Eingang der Düsenöffnung (37) defokussiert wird, sodass Laserlicht des Laserstrahls (100) vom Bereich der Düse (33) um den Eingang der Düsenöffnung (37) herum zu einem zweidimensionalen Bildsensor (303) reflektiert wird, wobei mit dem Bildsensor (303) eine Abbildung des Bereichs der Düse (33) um den Eingang der Düsenöffnung (37) herum aufgenommen wird, in welcher der Eingang der Düsenöffnung (37) zu erkennen ist.

18. Verfahren nach Anspruch 17, **dadurch gekennzeichnet, dass** in einem zweiten Schritt die Düsenöffnung (37) in der vom Bildsensor (303) aufgenommenen Abbildung mit einer Markierung (338) markiert wird, welche auf eine andere mit dem Bildsensor (303) aufgenommene Abbildung übertragbar ist, um in dieser anderen Abbildung die Position der Düsenöffnung (37) festzustellen.

19. Verfahren nach Anspruch 18, **dadurch gekennzeichnet, dass** die Markierung (338) mit zwei geraden, sich rechtwinklig schneidenden Linien (339.1, 339.2) ergänzt wird, deren Schnittpunkt in einem Zentrum der Düsenöffnung (37) angeordnet ist.

20. Verfahren nach einem der Ansprüche 17 bis 19, **dadurch gekennzeichnet, dass** in einem weiteren Schritt der Laserstrahl (100) auf eine Position auf den Bereich der Düse (33) um den Eingang der Düsenöffnung (37) herum fokussiert wird und mit dem Bildsensor (303) eine weitere Abbildung des Bereichs der Düse (33) um den Eingang der Düsenöffnung (37) herum aufgenommen wird.

21. Verfahren nach den Ansprüchen 19 und 20, **dadurch gekennzeichnet, dass** in nachfolgenden Schritten
a) zuerst der Fokuspunkt (340) des Laserstrahls (100) auf einer ersten der sich rechtwinklig schneidenden Linien (339.1) positioniert wird und die dafür verwendeten ersten Positionierungsparameter gespeichert werden,
b) danach der Fokuspunkt (340) des Laserstrahls (100) auf einer zweiten der sich rechtwinklig schneidenden Linien (339.2) positioniert wird und die dafür verwendeten zweiten Positionierungsparameter gespeichert werden, und
c) danach der Fokuspunkt (340) des Laserstrahls (100) basierend auf den gespeicherten ersten und zweiten Positionierungsparameter im Eingang der Düsenöffnung (37) positioniert wird.

22. Verfahren nach einem der Ansprüche 17 bis 21, **dadurch gekennzeichnet, dass** mit einem geeigneten beweglichen Objektiv einer CCD-Kamera (303) eine Kontur des Eingangs der Düsenöffnung (37) klar erkennbar gemacht wird.

## Claims

1. A liquid-jet laser machine tool (300) having a machining head (1) for coupling a laser beam (100) into a liquid jet (200), wherein the machining head (1) has a nozzle (33) having a nozzle opening (37) for generating the liquid jet (200), and the laser beam (100) is capable of being focused by a focusing installation (2, 305) into an port of the nozzle opening (37) for the laser beam (100) to be coupled into the liquid jet (200), and wherein the liquid-jet laser machine tool (300) comprises a two-dimensional image sensor (303) for a region of the nozzle (33) around the port of the nozzle opening (37) to be depicted, **characterized in that** the laser beam (100) is capable of being defocused about a port of the nozzle opening (37) such that laser light from the laser beam (100) is reflected from the region of the nozzle (33) around the port of the nozzle opening (37) toward the image sensor (303) so that a depiction of the region of the nozzle (33) around the port of the nozzle opening (37) is capable of being captured by the image sensor (303), in which depiction the port of the nozzle opening (37) is identifiable, wherein the focusing installation (2, 305) comprises a collimation unit (305) for the laser beam (100) to be collimated to form a parallel or approximately parallel beam, and a motionless static optical unit (2) for the parallel or approximately parallel beam to be focused onto a focal point (340) and the entire collimation unit (305), or individual optical elements of the collimation unit (305), is/are movable, for the collimation of the laser beam (100) to be modified and, on account thereof, for a distance of the focal point (340) of the laser beam (100) from the optical unit (2) to be modified.

2. The liquid-jet laser machine tool (300) as claimed in claim 14, **characterized by** a first mirror (306) for the laser beam (100) to be redirected, and a second mirror (308) for the laser beam (100) to be redirected, wherein the first mirror (306), driven by a first motor, is pivotable only about a first axis (307), and the second mirror (308), driven by a second motor, is pivotable only about a second axis (309), wherein the first axis (307) is aligned with the second axis (309) in such a manner that by way of a pivoting movement of the first mirror (306) about the first axis (307) the laser beam (100) is movable along a first straight line across the region of the nozzle (33) around the port of the nozzle opening (37), while by way of a pivoting movement of the second mirror (308) about the second axis (309) the laser beam (100) is movable along a second straight line across the region of the nozzle (33) around the port of the nozzle opening (37), wherein the first and the second straight line are mutually disposed at an angle and therefore intersect.

3. The liquid-jet laser machine tool (300) according to one of claims 1 to 2, **characterized in that the** image sensor (303) comprises a CCD camera (303) and this CCD camera (303) comprises a suitable, movable lens in order to be able to make the contour of the port of the nozzle opening (37) clearly identifiable in the depiction.

4. The liquid-jet laser machine tool (300) according to claim 1, **characterized in that** the machining head (1) for coupling a laser beam (100) into a liquid jet (200) comprises the following
a) an optical unit (2) having at least one optical element (20, 21.1, ..., 21.4) for focusing the laser beam (100), and
b) a coupling unit (3) having a liquid chamber (32) that is delimited by a wall, wherein a nozzle (33) having a nozzle opening (37) for generating a liquid jet (200) is disposed in the wall,
wherein, in a state in which the coupling unit (3) is connected to the optical unit (2), the laser beam (100) that is capable of being focused by the optical unit (2) is directable in a beam direction through the liquid chamber (32) of the coupling unit (3) into the nozzle opening (37), and is capable of being coupled into the liquid jet (200) that is generatable by the nozzle (33) and runs in the beam direction, wherein, for the liquid chamber (32) to be supplied with liquid from the optical unit (2), a liquid interface (50) is formed between the optical unit (2) and the coupling unit (3), **characterized in that,** in the state in which the coupling unit (3) is connected to the optical unit (2), the liquid interface (50), when viewed in the beam direction, is disposed ahead of that optical element (20, 21.4) of the optical unit (2) that is last in the beam direction.

5. The liquid-jet laser machine tool (300) according to claim 4, **characterized in that,** in the state in which the coupling unit (3) is connected to the optical unit (2), the liquid interface (50) has a liquid-interface area that is aligned at an angle in relation to a plane that is aligned so as to be perpendicular to the beam direction.

6. The liquid-jet laser machine tool (300) according to claim 5, **characterized in that** the liquid-interface area runs parallel with the beam direction.

7. The liquid-jet laser machine tool (300) according to one of claims 4 to 6, **characterized in that** the coupling unit (3) tapers off in a direction, wherein this direction, in the state in which the coupling unit (3) is connected to the optical unit (2), corresponds to the beam direction.

8. The liquid-jet laser machine tool (300) according to claim 7, **characterized in that** the tapering is cone-shell-shaped.

9. The liquid-jet laser machine tool (300) according to claim 8, **characterized in that** the cone-shell-shaped tapering has a cone-opening angle, measured between a rotationally symmetrical central axis of the cone-shell shape and the external area of the cone-shell shape, of at most 60°, at most 45°, at most 30°, in particular of at most 20°.

10. The liquid-jet laser machine tool (300) according to one of claims 4 to 9, **characterized in that** the coupling unit (3) has a gas-exit nozzle (62) for shaping a gas jet that envelops the liquid jet (200) .

11. The liquid-jet laser machine tool (300) according to claim 10, **characterized in that** the coupling unit (3) has a gas back-pressure chamber (40) which, in the state in which the coupling unit (3) is connected to the optical unit (2), is disposed behind the nozzle opening (37) when viewed in the beam direction.

12. The liquid-jet laser machine tool (300) according to claim 10 or 11, **characterized in that,** in the state in which the coupling unit (3) is connected to the optical unit (2), for the coupling unit (3) to be supplied with gas for the gas jet, a gas interface (60) is formed between the optical unit (2) and the coupling unit (3) which, when viewed in the beam direction, is disposed ahead of that optical element (20, 21.4) of the optical unit (2) that is last in the beam direction.

13. The liquid-jet laser machine tool (300) accoring to claim 12, **characterized in that,** in the state in which the coupling unit (3) is connected to the optical unit (2), the gas interface (60) has a gas-interface area that is aligned at an angle in relation to a plane that is aligned so as to be perpendicular to the beam direction.

14. The liquid-jet laser machine tool (300) according to claim 13, **characterized in that** the gas interface area, in the state in which the coupling unit (3) is connected to the optical unit (2), runs parallel with the beam direction.

15. The liquid-jet laser machine tool (300) according to one of claims 4 to 14, **characterized in that** the coupling unit (3) has a cavity which is open on one side and into which, in the state in which the coupling unit (3) is connected to the optical unit (2), the optical unit (2) protrudes.

16. The liquid-jet laser machine tool (300) according to one of claims 4 to 15, **characterized in that** the optical unit (2) forms a ferrule (23) and encloses the coupling unit (3) at the liquid interface (50).

17. A method for focusing a laser beam (100) into a nozzle opening (37) of a nozzle (33) in a liquid-jet laser machine tool (300) as claimed in one of claims 1 to 2, for coupling the laser beam (100) into a liquid jet (200) that is generated by the nozzle opening (37), with a first step in which the laser beam (100) is defocused about a port of the nozzle opening (37) such that laser light from the laser beam (100) is reflected from the region of the nozzle (33) around the port of the nozzle opening (37) toward a two-dimensional image sensor (303) wherein a depiction of the region of the nozzle (33) around the port of the nozzle opening (37) is captured by the image sensor (303), in which depiction the port of the nozzle opening (37) is identifiable.

18. The method according to claim 17, **characterized in that** in a second step the nozzle opening (37) in the depiction captured by the image sensor (303) is marked using a marker (338) which is transferable to another depiction captured by the image sensor (303) for establishing the position of the nozzle opening (37) in this other depiction.

19. The method according to claim 18, **characterized in that** the marker (338) is amended with two straight and perpendicularly intersecting lines (339.1, 339.2), the intersection point thereof being disposed in a center of the nozzle opening (37).

20. The method according to one of claims 17 to 19, **characterized in that** in a further step the laser beam (100) is focused onto a position on the region of the nozzle (33) around the port of the nozzle opening (37), and a further depiction of the region of the nozzle (33) around the port of the nozzle opening (37) is captured by the image sensor (303).

21. The method according to claims 19 and 20, **characterized in that** in the steps hereunder
a) first the focal point (340) of the laser beam (100) is positioned on a first of the perpendicularly intersecting lines (339.1), and the first positioning parameters used therefor are stored,
b) thereafter the focal point (340) of the laser beam (100) is positioned on a second of the perpendicularly intersecting lines (339.2), and the second positioning parameters used therefor are stored, and
c) thereafter, based on the stored first and second positioning parameters, the focal point (340) of the laser beam (100) is positioned in the port of the nozzle opening (37).

22. The method according to one of claims 17 to 21, **characterized in that** the contour of the port of the nozzle opening (37) is made clearly identifiable by using a suitable, movable lens of a CCD camera (303).

## Revendications

1. Machine d'usinage par laser à jet de liquide (300) comprenant une tête d'usinage (1) destinée à injecter un rayon laser (100) dans un jet de liquide (200), la tête d'usinage (1) possédant une buse (33) pourvue d'une ouverture de buse (37) servant à générer le jet de liquide (200), et le rayon laser (100) pouvant être focalisé dans une entrée de l'ouverture de buse (37) par un dispositif de focalisation (2, 305) en vue d'injecter le rayon laser (100) dans le jet de liquide (200), et la machine d'usinage par laser à jet de liquide (300) comportant un capteur d'image bidimensionnel (303) destiné à représenter une zone de la buse (33) autour de l'entrée de l'ouverture de buse (37), **caractérisée en ce que** le rayon laser (100) peut être défocalisé sur une entrée de l'ouverture de buse (37), de sorte que la lumière laser du rayon laser (100) soit réfléchie depuis la zone de la buse (33) autour de l'entrée de l'ouverture de buse (37) vers le capteur d'image (303), afin qu'une représentation de la zone de la buse (33) autour de l'entrée de l'ouverture de buse (37) dans laquelle l'entrée de l'ouverture de buse (37) est reconnaissable puisse être enregistrée avec le capteur d'image (303), le dispositif de focalisation (2, 305) comportant une unité de collimation (305) destinée à la collimation du rayon laser (100) en un rayon parallèle ou approximativement parallèle et une unité optique (2) immobile statique destinée à focaliser le rayon parallèle ou approximativement parallèle sur un point de focalisation (340) et l'ensemble de l'unité de collimation (305) ou les éléments optiques individuels de l'unité de collimation (305) étant mobiles afin de modifier la collimation du rayon laser (100) et ainsi modifier une distance entre le point de focalisation (340) du rayon laser (100) et l'unité optique (2).

2. Machine d'usinage par laser à jet de liquide (300) selon la revendication 1, **caractérisée par** un premier miroir (306) destiné à dévier le rayon laser (100) et un deuxième miroir (308) destiné à dévier le rayon laser (100), le premier miroir (306) ne pouvant pivoter qu'autour d'un premier axe (307) en étant entraîné par un premier moteur et le deuxième miroir (308) ne pouvant pivoter qu'autour d'un deuxième axe (309) en étant entraîné par un deuxième moteur, le premier axe (307) étant orienté par rapport au deuxième axe (309) de telle sorte qu'un mouvement de pivotement du premier miroir (306) autour du premier axe (307) permet de déplacer le rayon laser (100) le long d'une première droite au-dessus de la zone de la buse (33) autour de l'entrée de l'ouverture de buse (37), alors qu'un mouvement de pivotement du deuxième miroir (308) autour du deuxième axe (309) permet de déplacer le rayon laser (100) le long d'une deuxième droite au-dessus de la zone de la buse (33) autour de l'entrée de l'ouverture de buse (37), les première et deuxième droites étant disposées selon un certain angle l'une par rapport à l'autre et, de ce fait, se croisant.

3. Machine d'usinage par laser à jet de liquide (300) selon l'une des revendications 1 à 2, **caractérisée en ce que** le capteur d'image comprend une caméra CCD (303) qui, pour sa part, possède un objectif mobile approprié afin qu'un contour de l'entrée de l'ouverture de buse (37) puisse être rendu clairement reconnaissable dans la représentation.

4. Machine d'usinage par laser à jet de liquide selon la revendication 1, **caractérisée en ce que** la tête d'usinage (1) destinée à injecter un rayon laser (100) dans un jet de liquide (200) comprend les éléments suivants
a) une unité optique (2) dotée d'au moins un élément optique (20, 21.1, ... 21.4) destiné à focaliser le rayon laser (100) et
b) une unité de couplage (3) dotée d'un espace à liquide délimité par une paroi (32), une buse (33) ayant une ouverture de buse (37) destinée à générer un jet de liquide (200) étant disposée dans la paroi,
dans un état dans lequel l'unité de couplage (3) est reliée à l'unité optique (2), le rayon laser (100) qui peut être focalisé par l'unité optique (2) pouvant être dirigé dans une direction du jet à travers l'espace à liquide (32) de l'unité de couplage (3) dans l'ouverture de buse (37) et pouvant être injecté dans le jet de liquide (200) qui peut être généré par la buse (33) et qui s'écoule dans la direction du jet, une interface à liquide (50) étant formée entre l'unité optique (2) et l'unité de couplage (3) en vue d'alimenter l'espace à liquide (32) en liquide à partir de l'unité optique (2), **caractérisée en ce que** dans l'état dans lequel l'unité de couplage (3) est reliée à l'unité optique (2), l'interface à liquide (50), vue dans la direction du jet, est disposée avant le dernier élément optique (20, 21.4) de l'unité optique (2), vu dans la direction du jet.

5. Machine d'usinage par laser à jet de liquide selon la revendication 4, **caractérisée en ce que** dans l'état dans lequel l'unité de couplage (3) est reliée à l'unité optique (2), l'interface à liquide (50) possède une surface d'interface à liquide qui est orientée selon un certain angle par rapport à un plan orienté perpendiculairement à la direction du jet.

6. Machine d'usinage par laser à jet de liquide selon la revendication 5, **caractérisée en ce que** la surface d'interface à liquide suit un tracé parallèle à la direction du jet.

7. Machine d'usinage par laser à jet de liquide selon l'une des revendications 4 à 6, **caractérisée en ce que** l'unité de couplage (3) se rétrécit dans une direction, cette direction correspondant à la direction du jet dans l'état dans lequel l'unité de couplage (3) est reliée à l'unité optique (2).

8. Machine d'usinage par laser à jet de liquide selon la revendication 7, **caractérisée en ce que** le rétrécissement est en forme d'enveloppe conique.

9. Machine d'usinage par laser à jet de liquide selon la revendication 8, **caractérisée en ce que** le rétrécissement en forme d'enveloppe conique présente un angle d'ouverture de cône, mesuré entre l'axe central à symétrie de rotation de la forme d'enveloppe conique et la surface extérieure de la forme d'enveloppe conique, maximal de 60°, maximal de 45°, maximal de 30°, notamment maximal de 20°.

10. Machine d'usinage par laser à jet de liquide selon l'une des revendications 4 à 9, **caractérisée en ce que** l'unité de couplage (3) possède une buse de sortie de gaz (62) en vue de former un jet de gaz qui enveloppe le jet de liquide (200) .

11. Machine d'usinage par laser à jet de liquide selon la revendication 10, **caractérisée en ce que** l'unité de couplage (3) possède un espace de retenue de gaz (40) qui, dans l'état dans lequel l'unité de couplage (3) est reliée à l'unité optique (2), est disposé après l'ouverture de buse (37) vu dans la direction du jet.

12. Machine d'usinage par laser à jet de liquide selon la revendication 10 ou 11, **caractérisée en ce que** dans l'état dans lequel l'unité de couplage (3) est reliée à l'unité optique (2), en vue d'alimenter l'unité de couplage (3) en gaz pour le jet de gaz, une interface à gaz (60) est formée entre l'unité optique (2) et l'unité de couplage (3), laquelle, vue dans la direction du jet, est disposée avant le dernier élément optique (20, 21.4) de l'unité optique (2), vu dans la direction du jet.

13. Machine d'usinage par laser à jet de liquide selon la revendication 12, **caractérisée en ce que** dans l'état dans lequel l'unité de couplage (3) est reliée à l'unité optique (2), l'interface à gaz (60) possède une surface d'interface à gaz qui est orientée selon un certain angle par rapport à un plan orienté perpendiculairement à la direction du jet.

14. Machine d'usinage par laser à jet de liquide selon la revendication 13, **caractérisée en ce que** dans l'état dans lequel l'unité de couplage (3) est reliée à l'unité optique (2), la surface d'interface à gaz suit un tracé parallèle à la direction du jet.

15. Machine d'usinage par laser à jet de liquide selon l'une des revendications 4 à 14, **caractérisée en ce que** l'unité de couplage (3) possède un espace creux qui est ouvert d'un côté et dans lequel l'unité optique (2) fait saillie dans l'état dans lequel l'unité de couplage (3) est reliée à l'unité optique (2).

16. Machine d'usinage par laser à jet de liquide selon l'une des revendications 4 à 15, **caractérisée en ce que** l'unité optique (2) forme un manchon (23) et entoure l'unité de couplage (3) au niveau de l'interface à liquide (50).

17. Procédé pour focaliser un rayon laser (100) dans une ouverture de buse (37) d'une buse (33) dans une machine d'usinage par laser à jet de liquide (300) selon l'une des revendications 1 à 2, en vue d'injecter le rayon laser (100) dans un jet de liquide (200) généré par l'ouverture de buse (37), comprenant une première étape dans laquelle le rayon laser (100) est défocalisé sur une entrée de l'ouverture de buse (37), de sorte que la lumière laser du rayon laser (100) soit réfléchie depuis la zone de la buse (33) autour de l'entrée de l'ouverture de buse (37) vers un capteur d'image (303) bidimensionnel, une représentation de la zone de la buse (33) autour de l'entrée de l'ouverture de buse (37), dans laquelle l'entrée de l'ouverture de buse (37) est reconnaissable, étant enregistrée avec le capteur d'image (303).

18. Procédé selon la revendication 17, **caractérisé en ce que** dans une deuxième étape, l'ouverture de buse (37) est marquée avec un marquage (338) dans la représentation enregistrée avec le capteur d'image (303), lequel peut être transféré sur une autre représentation enregistrée avec le capteur d'image (303) afin de fixer la position de l'ouverture de buse (37) dans cette autre représentation.

19. Procédé selon la revendication 18, **caractérisé en ce que** le marquage (338) est complété par deux lignes droites (339.1, 339.2) qui se croisent à angle droit, dont le point d'intersection est disposé en un centre de l'ouverture de buse (37).

20. Procédé selon l'une des revendications 17 à 19, **caractérisé en ce que** dans une étape supplémentaire, le rayon laser (100) est focalisé sur une position sur la zone de la buse (33) autour de l'entrée de l'ouverture de buse (37) et une représentation supplémentaire de la zone de la buse (33) autour de l'entrée de l'ouverture de buse (37) est enregistrée avec le capteur d'image (303) .

21. Procédé selon les revendications 19 et 20, **caractérisé en ce que** dans les étapes suivantes
a) le point de focalisation (340) du rayon laser (100) est tout d'abord positionné sur une première des lignes (339.1) qui se croisent à angle droit et les premiers paramètres de positionnement utilisés à cet effet sont mémorisés,
b) ensuite le point de focalisation (340) du rayon laser (100) est positionné sur une deuxième des lignes (339.2) qui se croisent à angle droit et les deuxièmes paramètres de positionnement utilisés à cet effet sont mémorisés, et
c) ensuite le point de focalisation (340) du rayon laser (100) est positionné dans l'entrée de l'ouverture de buse (37) en se basant sur les premiers et deuxièmes paramètres de positionnement mémorisés.

22. Procédé selon l'une des revendications 17 à 21, **caractérisé en ce qu'**un contour de l'entrée de l'ouverture de buse (37) est rendu clairement reconnaissable avec un objectif mobile approprié d'une caméra CCD (303).
